(19)

**Europäisches Patentamt**
**European Patent Office**
**Office européen des brevets**

(11) **EP 4 694 264 A1**

(12) **EUROPEAN PATENT APPLICATION**
published in accordance with Art. 153(4) EPC

(43) Date of publication:
**11.02.2026 Bulletin 2026/07**

(21) Application number: **23942650.5**

(22) Date of filing: **25.06.2023**

(51) International Patent Classification (IPC):
*H04W 12/08* (2021.01)

(52) Cooperative Patent Classification (CPC):
**H04W 12/08**

(86) International application number:
**PCT/CN2023/102040**

(87) International publication number:
**WO 2025/000115 (02.01.2025 Gazette 2025/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventors:
  • **ZHANG, Xiangwei**
    **Dongguan, Guangdong 523860 (CN)**
  • **LUO, Chaoming**
    **Dongguan, Guangdong 523860 (CN)**

  • **YAN, Li**
    **Dongguan, Guangdong 523860 (CN)**
  • **LU, Liuming**
    **Dongguan, Guangdong 523860 (CN)**
  • **ZHOU, Pei**
    **Dongguan, Guangdong 523860 (CN)**
  • **HUANG, Weidong**
    **Dongguan, Guangdong 523860 (CN)**
  • **ZHOU, Liang**
    **Dongguan, Guangdong 523860 (CN)**
  • **XIANG, Yun**
    **Dongguan, Guangdong 523860 (CN)**
  • **MA, Cong**
    **Dongguan, Guangdong 523860 (CN)**

(74) Representative: **Novagraaf Technologies**
    **Bâtiment O2**
    **2, rue Sarah Bernhardt**
    **CS90017**
    **92665 Asnières-sur-Seine Cedex (FR)**

(54) **LINK SWITCHING METHOD AND APPARATUS, AND DEVICE AND MEDIUM**

(57)    The present application relates to the field of communications. Disclosed are a link switching method and apparatus, and a device and a medium. The method comprises: during the process of switching a first source link to a first target link, sending power control information, wherein the power control information is used for controlling the transmission power of candidate AP MLDs or a target AP MLD, the first source link is at least one link corresponding to a STA MLD and a source AP MLD, and the first target link is at least one link corresponding to the STA MLD and the target AP MLD, the target AP MLD being an AP MLD among the candidate AP MLDs. The method provided in the present application is conducive to improving the reliability of a first target link.

EP 4 694 264 A1

The case where power control information
is not transmitted

1101

1102

1103

5GHz

1104

2.4GHz

1104

1105

1106

5GHz

2.4GHz

The case where power control information
is transmitted

1101

1102

1103

5GHz

1104

2.4GHz

1104

1105

1106

5GHz

2.4GHz

FIG. 11

## Description

### TECHNICAL FIELD

The present disclosure relates to the field of communications, and in particular, relates to a method and apparatus for link transition, and a device and a medium thereof.

### RELATED ART

When a station (STA) roams, the STA usually needs to perform link transition. However, methods for link transition in some practices fail to ensure the reliability of a newly established link, thereby negatively affecting a communication quality of a communication system.

### SUMMARY

Embodiments of the present disclosure provide a method and apparatus for link transition, and a device and a medium thereof. The technical solutions are as follows.

According to some embodiments of the present disclosure, a method for link transition is provided. The method is performed by an STA multi-link device (MLD), and includes:

transmitting power control information in a process of transitioning a first source link to a first target link,
wherein the power control information is used to control transmit power of candidate access point (AP) MLDs or the target AP MLD, the first source link refers to at least one link corresponding to a STA MLD and a source AP MLD, and the first target link refers to at least one link corresponding to the STA MLD and the target AP MLD, wherein the target AP MLD is an AP MLD in the candidate AP MLDs.

According to some embodiments of the present disclosure, a method for link transition is provided. The method is performed by an AP MLD, and includes:

receiving power control information in a process of transitioning a first source link to a first target link,
wherein the power control information is used to control transmit power of candidate AP MLDs or the target AP MLD, the first source link refers to at least one link corresponding to an STA MLD and a source AP MLD, and the first target link refers to at least one link corresponding to the STA MLD and the target AP MLD, wherein the target AP MLD is an AP MLD in the candidate AP MLDs.

According to some embodiments of the present disclosure, a method for link transition is provided. The method is performed by a source AP MLD, and includes:

transmitting power control information in a process of transitioning a first source link to a first target link,
wherein the power control information is used to control transmit power of candidate AP MLDs or a target AP MLD, the first source link refers to at least one link corresponding to an STA MLD and the source AP MLD, and the first target link refers to at least one link corresponding to the STA MLD and the target AP MLD, wherein the target AP MLD is an AP MLD in the candidate AP MLDs.

According to some embodiments of the present disclosure, an apparatus for link transition is provided. The apparatus includes:

a first transmitting module, configured to transmit power control information in a process of transitioning a first source link to a first target link,
wherein the power control information is used to control transmit power of candidate AP MLDs or a target AP MLD; the first source link refers to at least one link corresponding to the apparatus and a source AP MLD, and the first target link refers to at least one link corresponding to the apparatus and the target AP MLD; and the target AP MLD is an AP MLD in candidate AP MLDs.

According to some embodiments of the present disclosure, an apparatus for link transition is provided. The apparatus includes:

a second receiving module, configured to receive power control information in a process of transitioning a first source link to a first target link,

wherein the power control information is used to control transmit power of candidate AP MLDs or the apparatus, the first source link refers to at least one link corresponding to an STA MLD and a source AP MLD, and the first target link refers to at least one link corresponding to the STA MLD and the apparatus, wherein the apparatus is an AP MLD in the candidate AP MLDs.

According to some embodiments of the present disclosure, an apparatus for link transition is provided. The apparatus includes:

a transmitting module, configured to transmit power control information in a process of transitioning a first source link to a first target link,

wherein the power control information is used to control transmit power of candidate AP MLDs or a target AP MLD, the first source link refers to at least one link corresponding to an STA MLD and the apparatus, and the first target link refers to at least one link corresponding to the STA MLD and the target AP MLD, wherein the target AP MLD is an AP MLD in the candidate AP MLDs.

According to some embodiments of the present disclosure, a wireless device is provided. The wireless device includes: a processor; a transceiver, communicably connected to the processor; and a memory, configured to store one or more executable instructions of the processor, wherein the processor is configured to load and execute the one or more executable instructions to perform the method for link transition described above.

According to some embodiments of the present disclosure, a computer-readable storage medium is provided. The computer-readable storage medium stores one or more executable instructions; the one or more executable instructions, when loaded and executed by a processor, cause the processor to perform the method for link transition described above.

According to some embodiments of the present disclosure, a computer program product is provided. The computer program product includes: one or more computer instructions stored in a computer-readable storage medium, wherein the one or more computer instructions, when read from the computer-readable storage medium and executed by a processor of a computer device, cause the computer device to perform the method for link transition described above.

According to some embodiments of the present disclosure, a chip is provided. The chip includes: programmable logic circuitry and/or one or more programs, wherein the chip is configured to perform the method for link transition described above.

According to some embodiments of the present disclosure, a computer program is provided. The computer program includes: one or more computer instructions, wherein the one or more computer instructions, when loaded and executed by a processor of a computer device, cause the computer device to perform the method for link transition described above.

The technical solutions according to the embodiments of the present disclosure have the following technical effects.

The STA MLD controls the transmit power of the candidate AP MLD by transmitting the power control information during the process of link transition, such that the first target link between the STA MLD and the target AP MLD has the great reliability.

**BRIEF DESCRIPTION OF THE DRAWINGS**

To describe the technical solutions according to the embodiments of the present disclosure more clearly, the following briefly describes the accompanying drawings required for describing the embodiments. Apparently, the accompanying drawings in the following description show merely some embodiments of the present disclosure, and those of ordinary skill in the art may still derive other drawings from these accompanying drawings without creative efforts.

FIG. 1 illustrates a schematic diagram of a roaming technology in some practices;

FIG. 2 illustrates a schematic flowchart of a method for link transition according to some exemplary embodiments of the present disclosure;

FIG. 3 illustrates a schematic flowchart of a method for link transition according to some exemplary embodiments of the present disclosure;

FIG. 4 illustrates a schematic diagram of a wireless communication system according to some exemplary embodiments of the present disclosure;

FIG. 5 illustrates a schematic flowchart of a method for link transition according to some exemplary embodiments of the present disclosure;

FIG. 6 illustrates a schematic flowchart of a method for link transition according to some exemplary embodiments of the present disclosure;

FIG. 7 illustrates a schematic flowchart of a method for link transition according to some exemplary embodiments of the present disclosure;

FIG. 8 illustrates a schematic flowchart of a method for link transition according to some exemplary embodiments of the present disclosure;

FIG. 9 illustrates a schematic flowchart of a method for link transition according to some exemplary embodiments of the present disclosure;

FIG. 10 illustrates a schematic flowchart of a method for link transition according to some exemplary embodiments of the present disclosure;

FIG. 11 illustrates a schematic diagram of a method for link transition according to some exemplary embodiments of the present disclosure;

FIG. 12 illustrates a schematic flowchart of a method for link transition according to some exemplary embodiments of the present disclosure;

FIG. 13 illustrates a schematic diagram of a format of a first frame according to some exemplary embodiments of the present disclosure;

FIG. 14 illustrates a schematic diagram of a format of a second frame according to some exemplary embodiments of the present disclosure;

FIG. 15 illustrates a schematic flowchart of a method for link transition according to some exemplary embodiments of the present disclosure;

FIG. 16 illustrates a schematic diagram of a format of a third frame according to some exemplary embodiments of the present disclosure;

FIG. 17 illustrates a schematic diagram of a format of a fourth frame according to some exemplary embodiments of the present disclosure;

FIG. 18 illustrates a schematic diagram of a format of a fifth frame according to some exemplary embodiments of the present disclosure;

FIG. 19 illustrates a schematic diagram of a relationship between a communication quality and link transition according to some exemplary embodiments of the present disclosure;

FIG. 20 illustrates a structural block diagram of an apparatus for link transition according to some exemplary embodiments of the present disclosure;

FIG. 21 illustrates a structural block diagram of an apparatus for link transition according to some exemplary embodiments of the present disclosure;

FIG. 22 illustrates a structural block diagram of an apparatus for link transition according to some exemplary embodiments of the present disclosure; and

FIG. 23 illustrates a schematic structural diagram of a wireless communication device according to some exemplary embodiments of the present disclosure.

## DETAILED DESCRIPTION

For clearer descriptions of the objectives, technical solutions, and advantages of the present disclosure, embodiments of the present disclosure are further described in detail hereinafter with reference to the accompanying drawings. Reference may be made in detail to the exemplary embodiments, examples of which are illustrated in the accompanying drawings. When the following description refers to the accompanying drawings, the same numbers in different accompanying drawings represent the same or similar elements unless otherwise indicated. The embodiments described in the following exemplary embodiments do not represent all embodiments consistent with the present disclosure. Rather, they are merely examples of apparatus and methods consistent with some aspects of the present disclosure, as detailed in the appended claims.

The terms used in the present disclosure are for the purpose of describing specific embodiments only and are not intended to limit the present disclosure. As used in the present disclosure and the appended claims, the singular forms "a," "an," and "the" are intended to include the plural forms as well, unless the context clearly indicates otherwise. It should also be understood that the term "and/or" as used herein refers to and encompasses any or all possible combinations of one or more associated listed items.

It should be understood that although the terms "first," "second," "third," or the like may be used in the present disclosure to describe various information, such information should not be limited to these terms. These terms are only used to distinguish one type of information from another. For example, first information may also be referred to as second information, and similarly, second information may also be referred to as first information, without departing from the scope of the present disclosure. The word "if," as used herein may be interpreted as "in the case where", "in the case of", or "in response to determining that", depending on the context. In this specification, when expressing the meaning conveyed by Boolean values, it is stated that "0" represents the "first meaning," and "1" represents the "second meaning." Without loss of generality, those skilled in the art can understand that these corresponding meanings is interchangeable; that is, "1" represents the "first meaning" and "0" represents the "second meaning."

**(1) Seamless Roaming Technology**

In some practices, when an STA roams among a plurality of APs, the STA needs to establish a connection with a target AP in a break-before-make manner, which leads to an interruption in data transmission during link transition.

Although a fast transition technology in some practices may reduce a duration of the interruption in data transmission during link transition, the problem of the interruption in data transmission during link transition is not completely resolved.

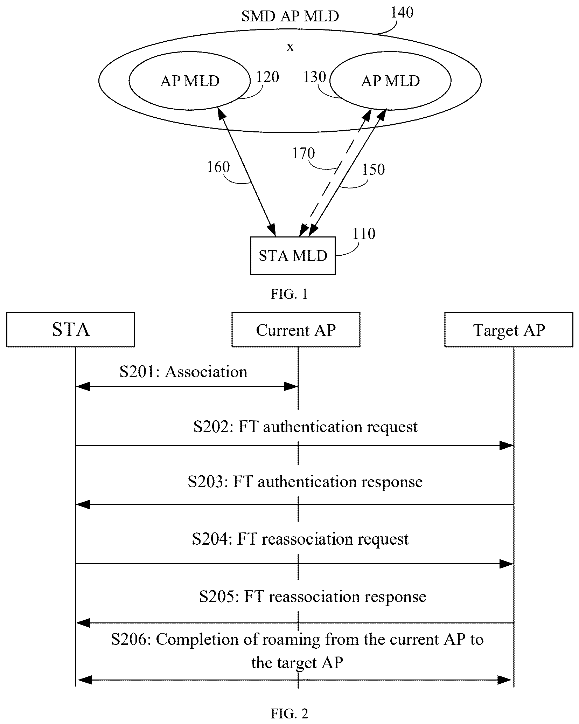

The multi-link operation (MLO) technology supports a multi-link station (also referred to as a multi-link user, an STA MLD) to simultaneously utilize a plurality of links for transmission. By using this technology, seamless transition, that is, seamless transition, in the break-before-make manner is achieved. The principle of the seamless transition technology is illustrated in FIG. 1.

FIG. 1 illustrates a multi-link framework named "single mobility domain (SMD) AP MLD," which includes: STA MLD 110, AP MLD 120, AP MLD 130, and x. x represents an upper medium access control (UMAC) sublayer of the SMD AP MLD, and mainly handles operations such as authentication and association for the SMD AP MLD. The AP MLDs and the UMAC sublayer within area 140 jointly constitute the SMD AP MLD. When STA MLD 110 roams, STA MLD 110 maintains link 150 with AP MLD 130, and establishes a new link 160 with AP MLD 120. During this period, due to x, it is unnecessary to re-authenticate STA MLD 110 with AP MLD 120. When STA MLD 110 successfully establishes a connection with AP MLD 120, the link 170 between STA MLD 110 and AP MLD 130 is disconnected, such that seamless transition is complete, and the problem of the interruption in data transmission during link transition is avoided.

**(2) Fast Basic Service Set Transition (FT)**

FT is a fast transition technology, and mainly functions to enable an STA, during a transition process, to avoid re-authenticating with a target AP through a series of interactive processes. Instead, the STA only needs to use the key acquired during the initialization association process between the STA and the current AP to recalculate a pairwise transient key (PTK) and a group transient key (GTK). The STA establishes a connection with the target AP using the PTK and GTK, such that the low delay of the business data flow during transition is achieved. The user does not perceive any interruption in data transmission, and the user experience is improved.

The FT technology provides two link transition modes, that is, over-the-air transition and over-the-distribution system (over-the-DS) transition.

1. In the over-the-air mode, the STA directly performs FT authentication with the target AP. The specific procedure is illustrated in FIG. 2.

**In S201**, the STA associates with the current AP.

That is, a connection has been established between the STA and the current AP, and session management, data transmission, and other operations may be performed between the STA and the current AP.

In a case where the STA accesses the network through the current AP for the first time, authentication succeeds, and a PTK is generated.

**In S202,** the STA transmits an FT authentication request to the target AP.

The target AP, upon receiving the FT authentication request from the STA, generates and installs the PTK.

**In S203,** the target AP transmits an FT authentication response to the STA.

The STA, upon receiving the FT authentication response from the target AP, generates and installs the PTK.

**In S204,** the STA transmits an FT reassociation request to the target AP.

The target AP, upon receiving the FT reassociation request from the STA, generates and installs the GTK.

**In S205,** the target AP transmits an FT reassociation response to the STA.

The STA, upon receiving the FT reassociation response from the target AP, generates and installs the GTK.

**In S206,** the STA completes roaming from the current AP to the target AP.

The STA may perform session management, data transmission, and other operations with the target AP.

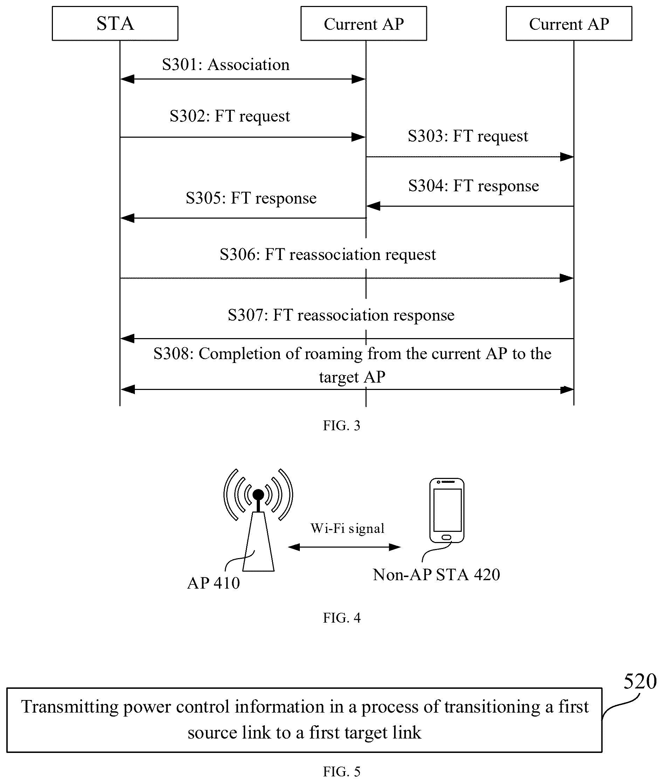

2. In the over-the-DS mode, the STA performs FT authentication with the target AP via the current AP. The specific procedure is illustrated in FIG. 3.

**In S301,** the STA associates with the current AP.

That is, a connection has been established between the STA and the current AP, and session management, data transmission, and other operations may be performed between the STA and the current AP.

In a case where the STA accesses the network through the current AP for the first time, authentication succeeds, and a PMK is generated.

**In S302,** the STA transmits an FT request to the current AP.

**In S303,** the current AP synchronizes the FT request to the target AP.

The target AP generates and installs the PTK.

**In S304,** the target AP transmits an FT response to the current AP.

**In S305,** the current AP synchronizes the FT response to the STA.

The STA generates and installs the PTK.

**In S306,** the STA transmits an FT reassociation request to the target AP.

The target AP, upon receiving the FT reassociation request from the STA, generates and installs the GTK.

**In S07,** the target AP transmits an FT reassociation response to the STA.

The STA, upon receiving the FT reassociation response from the target AP, generates and installs the GTK.

**In S308,** the STA completes roaming from the current AP to the target AP.

The STA may perform session management, data transmission, and other operations with the target AP.

However, the roaming technology does not consider the roaming reliability. That is, the new link established between the STA and the target AP is very likely to be low-reliabile, and the new link between the STA and the target AP may not possess the high stability, the low bit error rate, the low packet loss rate, and so on.

Based on the above problem, the present disclosure provides a method for link transition, which improves the reliability of the new link established between the STA and the target AP.

FIG. 4 illustrates a schematic diagram of a wireless communication system according to some exemplary embodiments of the present disclosure. The wireless communication system includes terminal devices, a terminal device and a network device, or an AP and an STA, which is not limited in the present disclosure. In the present disclosure, embodiments are illustrated using an example where the wireless communication system includes an AP 410 and a non-AP STA 420.

In some scenarios, the AP is also referred to as AP STA, which means that, the AP is also a type of STA.

In some embodiments, STAs include an AP STA and a non-AP STA.

Communications in the wireless communication system may be communications between an AP and a non-AP STA, or communications between a non-AP STA and another non-AP STA, or communications between an STA and a peer STA. The peer STA may refer to a device that communicates with the STA at the opposite end. For example, the peer STA may be an AP or a non-AP STA.

The AP is a bridge to connect wired and wireless networks, and mainly functions to connect various wireless network clients and then access the wireless network to the Ethernet. An AP device may be a terminal device equipped with a wireless-fidelity (Wi-Fi) chip or may be a network device.

It should be understood that the role of the STA in the communication system is not absolute. For example, in some scenarios, the mobile phone is a non-AP STA in the case where a mobile phone connects to a router, and the mobile phone is an AP in the case where the mobile phone is a hotspot for other mobile phones.

Both the AP and the non-AP STA are devices applicable to the Internet of Vehicles, nodes and sensors in the Internet of Things (IoT), smart cameras, smart remote controls, smart water meters and electricity meters in smart homes, sensors in smart cities, or the like.

In some embodiments, the non-AP STA supports various current and future wireless local area network (WLAN) standards of the 802.11 family, such as 802.11be, 802.11ax, 802.11ac, 802.11n, 802.11g, 802.11b, and 802.11a. The non-AP STA is also applicable to a network environment that supports a next-generation WLAN system. The next-generation WLAN system is a WLAN system evolved from the 802.11ax system, and may satisfy backward compatibility with the 802.11ax system. Next-generation Wi-Fi communications refer to any new generation of Wi-Fi communication after Wi-Fi 7 that is based on the IEEE 802.11be specification, for example, ultra-high reliability (UHR) communications. For example, the non-AP STA is a UHR STA.

In some embodiments, the AP is a device that supports various current and future WLAN standards of the 802.11 family, such as 802.11be, 802.11ax, 802.11ac, 802.11n, 802.11g, 802.11b, and 802.11a. The AP is also applicable to a network environment that supports a next-generation WLAN system. The next-generation WLAN system is a WLAN system evolved from the 802.11ax system, and may satisfy backward compatibility with the 802.11ax system. Next-generation Wi-Fi communications refer to any new generation of Wi-Fi communication after Wi-Fi 7 that is based on the IEEE 802.11be specification, for example, UHR communication. For example, the AP is a UHR AP.

In the embodiments of the present disclosure, the non-AP STA is a mobile phone, a tablet computer (Pad), an e-book reader, a laptop computer, a desktop computer, a television, a virtual reality (VR) device, an augmented reality (AR) device, a mediated reality (MR) device, an extended reality (XR) device, a baffle reality (BR) device, a cinematic reality (CR) device, a deceive reality (DR) device, a wireless device in industrial control, a set-top box, a wireless device in self-driving applications, an in-vehicle communication device, a wireless device in remote medical applications, a wireless device in smart grid applications, a wireless device in transportation safety applications, a wireless device in smart city or smart home applications, a wireless communication chip, an application-specific integrated circuit (ASIC), a system on chip (SoC), or the like that supports the WLAN/Wi-Fi technology.

The wireless communication system in the embodiments of the present disclosure supports frequency bands including, but not limited to: a millimeter wave frequency band (for example, 45 GHz or 60 GHz that falls within the frequency range of 30-300 GHz), and a sub-7GHz band (for example, 2.4 GHz, 5 GHz, or 6 GHz that falls within the frequency range of 1-7.25 GHz).

There may be one or more links between the non-AP STA and the AP.

In some embodiments, the non-AP STA and the AP support multi-frequency-band communications. For example, communications are performed simultaneously on at least one of the 2.4 GHz, 5 GHz, 6 GHz, 45 GHz, 60 GHz, or other frequency bands, or simultaneously on different channels within the same frequency band or on different channels in different frequency bands, such that the communication throughput and/or reliability between devices are improved. Such devices are commonly referred to as a multi-frequency-band devices, or MLDs, and are sometimes referred to as a multi-frequency-band entity or multi-link entity. The MLD may be an AP device or a non-AP STA device. In the case where the MLD is an AP device, the MLD includes one or more APs; or in the case where the MLD is a non-AP STA device, the MLD includes one or more non-AP STAs.

An MLD including one or more APs is referred to as an AP MLD. An MLD including one or more non-AP STAs is referred to as a Non-AP MLD or STA MLD.

In some embodiments, devices operating in the millimeter wave frequency band possess the multi-link operation (MLO) capability. In addition to STA/AP at the millimeter wave frequency band, the devices have at least one affiliated STA/AP in a low frequency band, and device association and discovery are performed in the low frequency band.

In some embodiments, the STA exists in the form of one or more basic service sets (BSSs), and a BSS is a set of STAs that may successfully synchronize to communicate with each other. One BSS may include an AP, or may not include an AP.

In some embodiments, an AP MLD includes a plurality of APs, and an STA MLD includes a plurality of STAs. A plurality of links are formed between the APs in the AP MLD and the STAs in the STA MLD, and communications between the APs in the AP MLD and the STAs in the STA MLD are achieved through the corresponding links.

In some embodiments, an AP is a device deployed in a WLAN/Wi-Fi system that provides wireless communication function for an STA. The STA may be user equipment (UE), an access terminal, a subscriber unit, a subscriber station, a mobile station, a mobile console, a remote station, a remote terminal, a mobile device, a wireless communication device, a user agent, a user apparatus, or the like. The STA may also be a cellular phone, a cordless phone, a session initiation protocol (SIP) phone, a wireless local loop (WLL) station, a personal digital assistant (PDA), a handheld device with a wireless communication function, a computing device or another processing device connected to a wireless modem, an in-vehicle device, or a wearable device, which is not limited in the embodiments of the present disclosure.

In some embodiments, both the AP and the non-AP STA support the IEEE 802.11 standard, but are not limited to the IEEE 802.11 standard.

FIG. 5 illustrates a schematic flowchart of a method for link transition according to some exemplary embodiments of the present disclosure. Taking the example where the method is performed by an STA MLD, the method includes at least part of the following process.

**In S520,** power control information is transmitted in a process of transitioning a first source link to a first target link.

In the embodiments of the present disclosure, the STA represents a non-AP STA, and the STA MLD represents a non-AP STA MLD.

In the embodiments of the present disclosure, an STA MLD includes one or more non-AP STAs that support the MLO capability. The non-AP STA in the STA MLD may also be referred to as a non-AP STA or STA affiliated with the STA MLD.

Similarly, the AP MLD includes one or more APs that support the MLO capability. The AP in the AP MLD may also be referred to as a AP STA or AP affiliated with the AP MLD.

There exist at least two links between the AP MLD and the STA MLD. That is, the AP MLD and the STA MLD may simultaneously operate on at least two links. In some embodiments, the at least two links between the AP MLD and the STA MLD are in the same frequency band; for example, the at least two links are both in a low frequency band or both in a millimeter wave frequency band. Alternatively, the at least two links between the AP MLD and STA MLD are in different frequency bands; for example, at least one link is in a low frequency band, and at least one other link is in a millimeter wave frequency band.

A link operating in the millimeter wave frequency band may be referred to as a millimeter wave link, and a link operating in a non-millimeter wave frequency band may be referred to as a non-millimeter wave link. The non-millimeter wave frequency band refers to frequency bands other than the millimeter wave frequency band, such as the sub-7GHz band or new frequency bands that may be planned in the future and are different from the millimeter wave band, which is not limited in the present disclosure.

The first source link refers to at least one link corresponding to the STA MLD and the source AP MLD, that is, at least one link between the STA MLD and the source AP MLD. The source AP MLD may also be referred to as the current AP MLD. Therefore, the first source link may also be referred to as the first current link. The source AP MLD is the AP MLD currently associated with the STA MLD, that is, the AP MLD that has already established a connection with the STA MLD, or the AP MLD with which the STA MLD was associated prior to roaming.

The first target link refers to at least one link corresponding to the STA MLD and the target AP MLD, that is, at least one link between the STA MLD and the target AP MLD. The target AP MLD is the AP MLD that the STA MLD intends to associate with, that is, the AP MLD that the STA MLD intends to establish a connection with, or the AP MLD that the STA MLD is to associate with, or the AP MLD that the STA MLD is to establish a connection with, or the AP MLD with which the STA MLD is to be associated upon roaming.

Transitioning the first source link to the first target link may be that the STA MLD roams from the source AP MLD corresponding to the first source link to the target AP MLD corresponding to the first target link.

The power control information is used to control the transmit power of candidate AP MLDs or a target AP MLD. Alternatively, the power control information is used to adjust transmit power of candidate AP MLDs or a target AP MLD. The target AP MLD is an AP MLD in candidate AP MLDs.

In some embodiments, prior to S520, the STA MLD determines the target AP MLD. Exemplarily, the STA MLD determines the target AP MLD based on a scan result; the STA MLD determines the target AP MLD based on pre-configuration information; the STA MLD determines the target AP MLD according to stipulation of a communication protocol; or the STA MLD determines the target AP MLD based on information from the source AP MLD. In this case, S520 includes: transmitting, by the STA MLD, power control information to the target AP MLD in the process of transitioning the first source link to the first target link; the power control information is used to control the transmit power of the target AP MLD. In this case, the reliability of the first target link is improved, interference within the communication system is minimized, the impact on service transmission over other links is reduced, and the communication quality within the communication system is ensured.

In some embodiments, the STA MLD adopts a soft transitioning-based method for a link transition. The soft transition refers to link transition implemented using the seamless roaming technology. During the process in which the STA MLD roams from the source AP MLD to the target AP MLD, the STA MLD maintains the connection between the STA MLD and the source AP MLD; that is, at least one link between the STA MLD and the source AP MLD keeps in an operating state. Meanwhile, the STA MLD establishes a connection with the target AP MLD; that is, at least one new link is established between the STA MLD and the target AP MLD.

In summary, in the method according to the embodiments of the present disclosure, the STA MLD controls the transmit power of the candidate AP MLDs by transmitting the power control information during the process of the link transition, such that the first target link between the STA MLD and the target AP MLD has the great reliability.

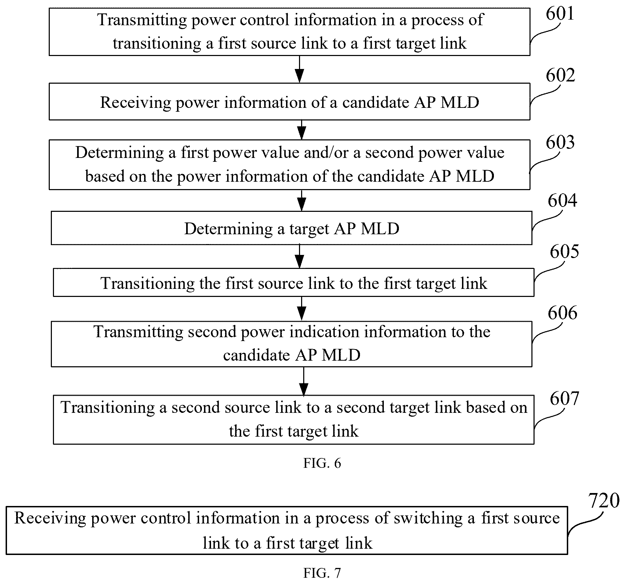

FIG. 6 illustrates a schematic flowchart of a method for link transition according to some exemplary embodiments of the present disclosure. Taking the example where the method is performed by an STA MLD, the method includes at least part of the following processes.

**In S601,** power control information is transmitted in a process of transitioning a first source link to a first target link.

In some embodiments, S601 is implemented as S601a or S601b.

In S601a, first power indication information is transmitted to a candidate AP MLD.

In some embodiments, the power control information includes the first power indication information used to adjust or control the transmit power of the candidate AP MLDs.

In the embodiments of the present disclosure, the candidate AP MLD is an AP MLD different from the source AP MLD. The candidate AP MLD includes at least one of: an AP MLD adjacent to the source AP MLD, an AP MLD located on the same physical device as the source AP MLD, an AP MLD located within the signal coverage of the source AP MLD, an AP MLD located within the wireless medium coverage of the source AP MLD, an AP MLD identifiable by the source AP MLD, an AP MLD located within the signal coverage of the STA MLD, an AP MLD located within the wireless medium coverage of the STA MLD, an AP MLD identifiable by the STA MLD, a pre-configured candidate AP MLD, or a candidate AP MLD stipulated by a communication protocol.

In some embodiments, the first power indication information is carried in a first frame for transmission. The first frame includes at least one of an Element Identity (ID) field, a Length field, an Element ID Extension field, a transmit (TX) Power field, or a Target Receive Power field. The TX Power field indicates the current (that is, when transmitting the first frame) transmit power value of the STA MLD, and the Target Receive Power field indicates the receive power that the STA MLD expects to measure when receiving a signal from the transmitter (for example, a candidate AP MLD).

In some embodiments, the STA MLD, when performing S601a, initiates active scanning of the first target link; or, the STA MLD, upon performing S601a, initiates active scanning of the first target link; or, performing S601a by the STA MLD means that the STA MLD initiates active scanning of the first target link.

In S601b, first power control trigger information is transmitted to the source AP MLD.

In some embodiments, the power control information includes the first power control trigger information used to trigger the source AP MLD to transmit first power indication information to the candidate AP MLD. The first power indication information is used to adjust or control the transmit power of the candidate AP MLDs.

In some embodiments, the first power control trigger information is transmitted over a second source link, and the second source link is at least one link, other than the first source link, corresponding to the STA MLD and the source AP MLD.

In some embodiments, the first power control trigger information is carried in a third frame for transmission. The third frame includes at least one of a Category field, an Action field, a Link ID field, a Dialog Token field, an Element ID field, a Length field, an Element ID Extension field, an AP MLD Information field, or the like.

In some embodiments, the AP MLD Information field includes at least one of an AP MLD Address field or a Power field.

In some embodiments, the value of the Action field includes at least one of:

· a first value, indicating that the third frame is used to indicate the first power control trigger information;
· a second value, indicating that the third frame includes a power upload indication;
· a third value, indicating that the third frame includes a target AP MLD confirmation indication; or
· a fourth value, indicating that the third frame includes a target AP MLD association completion indication.

In some embodiments, the first power indication information is carried in a fourth frame for transmission. The fourth frame includes at least one of a Trigger Type field, an Uplink (UL) Length field, a Trigger Dependent Common Info field, or a Reserved field.

In some embodiments, the Trigger Dependent Common Info field includes at least one of a Link ID field, a Power field, or a Life Time field. The Link ID field indicates the ID of the first target link, the Power field indicates the transmit power value that the candidate AP MLD needs to adjust to on the first target link, and the Life Time field indicates a duration within which the candidate AP MLD needs to use the required adjusted transmit power value.

In some embodiments, the STA MLD, when performing S601b, initiates passive scanning of the first target link; or, the STA MLD, upon performing S601b, initiates passive scanning of the first target link; or, performing S601b by the STA MLD means that the STA MLD initiates passive scanning of the first target link.

**In S602,** power information of the candidate AP MLD is received.

The power information of the candidate AP MLD includes at least one of: a fourth power value, a fifth power value, or a third power value.

The fourth power value is the transmit power value adjusted by the candidate AP MLD based on the power control information; that is, the fourth power value is the transmit power value that the candidate AP MLD adjusts to on the first target link based on the power control information, or the current transmit power of the candidate AP MLDs on the first target link. The fifth power value is the target receive power value of the candidate AP MLD on the first target link; that is, the fifth power value is the receive power that the candidate AP MLD expects to measure on the first target link when receiving a signal from a transmitter (such as STA MLD). The third power value is the maximum transmit power value of the candidate AP MLD on the first target link, that is, the third power value is the maximum transmit power value that the candidate AP MLD may adopt on the first target link when satisfying regulatory requirements and based on its own state (such as the power supply state).

In some embodiments, the power information of the candidate AP MLD is carried in a second frame for transmission, and the second frame includes at least one of an Element ID field, a Length field, an Element ID Extension field, a TX Power field, a Target Receive Power field, or a Maximum (Max) Power field. The TX Power field indicates the fourth power value of the candidate AP MLD, the Target Receive Power field indicates the fifth power value of the candidate AP MLD, and the Max Power field indicates the third power value of the candidate AP MLD.

**In S603,** a first power value and/or a second power value are determined based on the power information of the candidate AP MLD.

In some embodiments, S603 is implemented as S603a, 603b, or 603c.

In S603a, the first power value is determined based on the power information of the candidate AP MLD.

In S603b, the second power value is determined based on the power information of the candidate AP MLD.

In S603c, the first power value and the second power value are determined based on the power information of the candidate AP MLD.

The first power value is the transmit power value required by the STA MLD on the first target link when the STA MLD establishes the first target link with the target AP MLD.

The second power value is the transmit power value required by the candidate AP MLD on the first target link when the candidate AP MLD establishes the first target link with the STA MLD.

In some embodiments, the first power value is calculated by the STA MLD, or is calculated by the source AP MLD and then transmitted to the STA MLD.

In some embodiments, the power information of the candidate AP MLD includes at least one of the fourth power value, the fifth power value, or the third power value. The STA MLD calculates, based on at least one of the fourth power value, the fifth power value, or the third power value, the first power value and the second power value.

In some embodiments, the STA MLD transmits the identification information of the candidate AP MLD and the corresponding calculated second power value to the source AP MLD.

In some embodiments, the power information of the candidate AP MLD includes at least one of the fourth power value, the fifth power value, or the third power value. The STA MLD transmits the power information of the candidate AP MLD, a sixth power value, and a seventh power value to the source AP MLD. The sixth power value is the expected receive power value of the STA MLD on the first target link, and the seventh power value is the receive power value measured by the STA MLD on the first target link when the STA MLD receives a signal from the transmitter (such as the candidate AP MLD). The STA MLD receives the first power value and the second power value from the source AP MLD.

In some embodiments, the power information of the candidate AP MLD includes at least one of the fifth power value, the third power value, or the second power value. The STA MLD calculates, based on at least one of the fifth power value, the third power value, or the second power value, the first power value.

The first power value includes the sum of the path loss and the fifth power value, and the second power value includes the sum of the path loss and the sixth power value. The path loss includes the difference between the fourth power value and the seventh power value.

**In S604,** a target AP MLD is determined.

In some embodiments, the target AP MLD is determined based on the second power value and the third power value.

In some embodiments, a target AP MLD is determined from the candidate AP MLDs based on the magnitude relationship between the second power value and the third power value.

Exemplarily, in the case where the second power value is less than or equal to the third power value, i.e., $Pa \leq Pmax,$ the candidate AP MLD corresponding to the third power value greater than or equal to the second power value is the target AP MLD, and the STA MLD may establish the first target link with the target AP MLD.

In some embodiments, a target AP MLD is determined from the candidate AP MLDs based on the priority score. The target AP MLD is the AP MLD with the highest priority score in the candidate AP MLDs. The priority score is determined based on the power information of the candidate AP MLD and the second power value.

In some embodiments, the priority score is a difference between a first product and a second sum value. The first product is a product of the third power value corresponding to the candidate AP MLD and the first weight, and the second sum value is a sum of a second product and a third product. The second product is a product of a path loss and a second weight, and the third product is a product of the second power value and a third weight. The sum of the first weight, the second weight, and the third weight is 1 or 100%.

**In S605,** the first source link is transitioned to the first target link.

The STA MLD establishes the first target link with the target AP MLD based on the first power value.

In some embodiments, the STA MLD establishes the first target link with the target AP MLD using the FT technology. Exemplarily, the STA MLD uses the first power value to transmit an authentication request and a reassociation request to the target AP MLD, and the target AP MLD uses the second power value to transmit an authentication response and a reassociation response to the STA MLD, such that the first target link is established. Alternatively, the STA MLD transmits an authentication request to the source AP MLD, the target AP MLD transmits an authentication response to the source AP MLD, the STA MLD uses the first power value to transmit a reassociation request to the target AP MLD, and the target AP MLD uses the second power value to transmit a reassociation response to the STA MLD, such that the first target link is established.

**In S606,** second power indication information is transmitted to the candidate AP MLD.

The candidate AP MLDs include the target AP MLD and another candidate AP MLD. The another candidate AP MLD is an AP MLD in the candidate AP MLDs other than the target AP MLD.

In some embodiments, the STA MLD transmits the second power indication information to the another candidate AP MLD; alternatively, the STA MLD transmits the second power indication information to the another candidate AP MLD and the target AP MLD.

The second power indication information is used to restore the transmit power of the candidate AP MLDs, that is, to restore the transmit power of the candidate AP MLDs from the fourth power value to the transmit power value prior to receiving the first power indication information. In the process, the transmit power of the another candidate AP MLD is restored to the original transmit power, such that the power consumption of the another candidate AP MLD is reduced, and thus the negative impacts of link transition on the communication system, such as signal interference is mitigated.

In some embodiments, the first power indication information indicates the life time, that is, the effective time of the first power indication information. Upon expiration of the life time, the candidate AP MLD automatically restores the transmit power to reduce power consumption and mitigate the negative impacts of link transition on the communication system.

**In S607,** a second source link is transitioned to a second target link based on the first target link.

The second source link refers to at least one link, other than the first source link, corresponding to the STA MLD and the source AP MLD, and the second target link refers to at least one link, other than the first target link, corresponding to the STA MLD and the target AP MLD.

Transition of the second source link to the second target link may be that the STA MLD roams from the source AP MLD corresponding to the second source link to the target AP MLD corresponding to the second target link.

In some embodiments, the STA MLD establishes the second target link with the target AP MLD using the FT technology. Exemplarily, the STA MLD transmits an authentication request and a reassociation request to the target AP MLD over the first target link, and receives an authentication response and a reassociation response from the target AP MLD over the first target link, such that the second target link is established, that is, the second source link is transitioned to the second target link.

It should be understood that, in the embodiments of the present disclosure, S606 and S607 are optional processes. S603 and S604 may be combined into one process, and S605 and S606 may be combined into one process. The execution order of each process may be adaptively adjusted according to specific circumstances. For example, S607 may be performed prior to S606, or S606 may be performed prior to S605.

In summary, in the method according to the embodiments of the present disclosure, the STA MLD controls the transmit power of the candidate AP MLDs by transmitting the power control information during the process transitioning the link , such that active scanning or passive scanning of the first target link is achieved. The link transition mode exhibits the higher flexibility, and the established first target link also exhibits the great reliability. Moreover, during the process of transitioning the first source link to the first target link, maintaining the connection between the STA MLD and the source AP MLD may prevent the problem of the interruption in data transmission that may occur during link transition, reduce the likelihood of the interruption in data transmission perceived by the user, and enhance the user experience. In addition, the STA MLD further establishes the second target link based on the established first target link, such that roaming from the source AP MLD to the target AP MLD possesses the great reliability and the great simplicity.

FIG. 7 illustrates a schematic flowchart of a method for link transition according to some exemplary embodiments of the present disclosure. Taking the example where the method is performed by a target AP MLD, the method includes at least part of the following process.

In S720, power control information is received in a process of transitioning a first source link to a first target link.

The first source link refers to at least one link corresponding to the STA MLD and the source AP MLD, that is, at least one link between the STA MLD and the source AP MLD. The source AP MLD may also be referred to as the current AP MLD. Therefore, the first source link may also be referred to as the first current link. The source AP MLD is the AP MLD currently associated with the STA MLD, that is, the AP MLD that has already established a connection with the STA MLD, or the AP MLD with which the STA MLD was associated prior to roaming.

The first target link refers to at least one link corresponding to the STA MLD and the target AP MLD, that is, at least one link between the STA MLD and the target AP MLD. The target AP MLD is the AP MLD that the STA MLD intends to associate with, that is, the AP MLD that the STA MLD intends to establish a connection with, or the AP MLD that the STA MLD is to associate with, or the AP MLD that the STA MLD is to establish a connection with, or the AP MLD with which the STA MLD is to be associated upon roaming.

Transitioning the first source link to the first target link may be that the STA MLD roams from the source AP MLD corresponding to the first source link to the target AP MLD corresponding to the first target link.

The power control information is used to control transmit power of candidate AP MLDs or a target AP MLD. Alternatively, the power control information is used to adjust transmit power of candidate AP MLDs or a target AP MLD. The target AP MLD is an AP MLD in candidate AP MLDs.

In some embodiments, the STA MLD adopts a soft transitioning-based method for link transition. The soft transition refers to link transition implemented using the seamless roaming technology. During the process in which the STA MLD roams from the source AP MLD to the target AP MLD, the STA MLD maintains the connection between the STA MLD and the source AP MLD; that is, at least one link between the STA MLD and the source AP MLD keeps in an operating state. Meanwhile, the STA MLD establishes a connection with the target AP MLD; that is, at least one new link is established between the STA MLD and the target AP MLD.

In some embodiments, the power control information is transmitted by the STA MLD or the source AP MLD.

In some embodiments, the candidate AP MLD adjusts the transmit power to a fourth power value based on the power control information, and transmits the power information of the candidate AP MLD using the fourth power value.

It should be understood that the method for link transition illustrated in FIG. 7 may be performed by the candidate AP MLD, and the target AP belongs to the candidate AP MLD.

In summary, in the method according to the embodiments of the present disclosure, the candidate AP MLD adjusts the transmit power based on the power control information during the process of link transition, such that the first target link established between the STA MLD and the target AP MLD in the candidate AP MLD has the great reliability. Moreover, during the process of transitioning the first source link to the first target link, maintaining the connection between the STA MLD and the source AP MLD may prevent the problem of the interruption in data transmission that may occur during link transition, reduce the likelihood of the interruption in data transmission perceived by the user, and enhance the user experience.

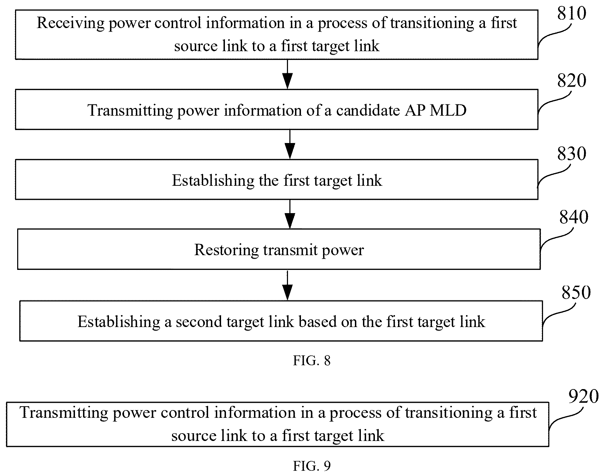

FIG. 8 illustrates a schematic flowchart of a method for link transition according to some exemplary embodiments of the present disclosure. Taking the example where the method is performed by a target AP MLD, the method includes at least part of the following processes.

**In S810**, power control information is received in a process of transitioning a first source link to a first target link.

In some embodiments, the power control information includes the first power indication information used to adjust or control the transmit power of the candidate AP MLDs.

In some embodiments, the candidate AP MLD receives first power indication information from the STA MLD. That is, the STA MLD transmits the first power indication information to the candidate AP MLD by active scanning.

In some embodiments, the first power indication information is carried in a first frame for transmission. The first frame includes at least one of an Element ID field, a Length field, an Element ID Extension field, a TX Power field, or a Target Receive Power field. The TX Power field indicates the current (that is, when transmitting the first frame) transmit power value of the STA MLD, and the Target Receive Power field indicates the receive power that the STA MLD expects to measure when receiving a signal from the transmitter (for example, a candidate AP MLD).

In some embodiments, the candidate AP MLD receives the first power indication information from the source AP MLD. That is, the STA MLD indirectly transmits the first power indication information to the candidate AP MLD via the source AP MLD by passive scanning.

In some embodiments, the first power indication information is carried in a fourth frame for transmission. The fourth frame includes at least one of a Trigger Type field, an UL Length field, a Trigger Dependent Common Info field, or a Reserved field.

In some embodiments, the Trigger Dependent Common Info field includes at least one of a Link ID field, a Power field, or a Life Time field. The Link ID field indicates the ID of the first target link, the Power field indicates the transmit power value that the candidate AP MLD needs to adjust to on the first target link, and the Life Time field indicates a duration within which the candidate AP MLD needs to use the required adjusted transmit power value.

**In S820**, power information of the candidate AP MLD is transmitted.

The power information of the candidate AP MLD includes at least one of: a fourth power value, a fifth power value, or a third power value.

The fourth power value is the transmit power value adjusted by the candidate AP MLD on the first target link based on the power control information; that is, the fourth power value is the current transmit power of the candidate AP MLDs on the first target link. The fifth power value is the target receive power value of the candidate AP MLD on the first target link; that is, the fifth power value is the receive power that the candidate AP MLD expects to measure on the first target link when receiving a signal from a transmitter (such as STA MLD). The third power value is the maximum transmit power value of the candidate AP MLD on the first target link; that is, the third power value is the maximum transmit power value that the candidate AP MLD may adopt on the first target link when satisfying regulatory requirements and based on its own state (for example, the power supply state).

In some embodiments, the power information of the candidate AP MLD is carried in a second frame for transmission, and the second frame includes at least one of an Element ID field, a Length field, an Element ID Extension field, a TX Power field, a Target Receive Power field, or a Max Power field. The TX Power field indicates the fourth power value of the candidate AP MLD, the Target Receive Power field indicates the fifth power value of the candidate AP MLD, and the Max Power field indicates the third power value of the candidate AP MLD.

In some embodiments, the candidate AP MLD calculates a second power value. The second power value is the transmit power value required by the candidate AP MLD on the first target link when the candidate AP MLD establishes the first target link with the STA MLD.

**In S830**, the first target link is established.

The target AP MLD establishes the first target link with the STA MLD.

The target AP MLD is an AP MLD in candidate AP MLDs.

In some embodiments, the STA MLD calculates the second power value. In some embodiments, the target AP MLD is an AP MLD in the candidate AP MLDs corresponding to the third power value greater than or equal to the second power value.

In some embodiments, the target AP MLD is an AP MLD with the highest priority score in the candidate AP MLDs. The priority score is determined based on the power information of the candidate AP MLD and the second power value.

In some embodiments, the priority score is the difference between a first product and a second sum value. The first product is a product of the third power value corresponding to the candidate AP MLD and the first weight, and the second sum value is a sum of a second product and a third product. The second product is a product of a path loss and a second weight, and the third product is a product of the second power value and a third weight. The sum of the first weight, the second weight, and the third weight is 1 or 100%.

In some embodiments, the target AP MLD establishes the first target link with the STA MLD using the FT technology. Exemplarily, the STA MLD uses the first power value to transmit an authentication request and a reassociation request to the target AP MLD, and the target AP MLD uses the second power value to transmit an authentication response and a reassociation response to the STA MLD, such that the first target link is established. Alternatively, the STA MLD transmits an authentication request to the source AP MLD, the target AP MLD transmits an authentication response to the source AP MLD, the STA MLD uses the first power value to transmit a reassociation request to the target AP MLD, and the target AP MLD uses the second power value to transmit a reassociation response to the STA MLD, such that the first target link is established.

**In S840**, a transmit power is restored.

In some embodiments, the first power indication information indicates the life time, that is, the effective time of the first power indication information. Upon expiration of the life time, the candidate AP MLD automatically restores the transmit power to reduce power consumption and mitigate the negative impacts of link transition on the communication system.

In some embodiments, the candidate AP MLD receives second power indication information from the source AP MLD or the STA MLD, and the second power indication information is used to restore the transmit power of the candidate AP MLDs, that is, to restore the transmit power of the candidate AP MLDs from the fourth power value to the transmit power value prior to receiving the first power indication information. The candidate AP MLD restores, based on the received second power indication information, the transmit power.

**In S850,** a second target link is established based on the first target link.

The second target link is at least one link, other than the first target link, corresponding to the STA MLD and the target AP MLD.

In some embodiments, the STA MLD establishes the second target link with the target AP MLD using the FT technology. Exemplarily, the STA MLD transmits an authentication request and a reassociation request to the target AP MLD over the first target link, and receives an authentication response and a reassociation response from the target AP MLD over the first target link, such that the second target link is established, that is, the second source link is transitioned to the second target link.

It should be understood that, in the embodiments of the present disclosure, S830 and S840 are optional processes. S810 and S820 may be combined into one process, and S830 and S840 may be combined into one process. The execution order of each S may be adaptively adjusted according to specific circumstances. For example, S840 may be performed prior to S830, or S850 may be performed prior to S840.

It should be understood that some or all of the processes in the method for link transition illustrated in FIG. 8 may be performed by the candidate AP MLD, and the target AP MLD belongs to the candidate AP MLD. Exemplarily, the candidate AP MLD may perform S810, S820, and S850, and may also participate in performing S830 and S840.

In summary, in the method according to the embodiments of the present disclosure, the candidate AP MLD adjusts the transmit power based on power control information during the process of link transition, and the STA MLD establishes the connection with the target AP MLD in the candidate AP MLDs by active scanning or passive scanning. The link transition mode exhibits the higher flexibility, and the reliability of the first target link between the STA MLD and the target AP MLD is improved. Moreover, during the process of transitioning the first source link to the first target link, maintaining the connection between the STA MLD and the source AP MLD may prevent the problem of the interruption in data transmission that may occur during link transition, reduce the likelihood of the interruption in data transmission perceived by the user, and enhance the user experience.

FIG. 9 illustrates a schematic flowchart of a method for link transition according to some exemplary embodiments of the present disclosure. Taking the example where the method is performed by a source AP MLD, the method includes at least part of the following process.

**In S920,** power control information is transmitted in a process of transitioning a first source link to a first target link.

In the embodiments of the present disclosure, transmission may be understood as reception, as transmitting, or as both reception and transmitting.

The first source link refers to at least one link corresponding to the STA MLD and the source AP MLD, that is, at least one link between the STA MLD and the source AP MLD. The source AP MLD may also be referred to as the current AP MLD. Therefore, the first source link may also be referred to as the first current link. The source AP MLD is the AP MLD currently associated with the STA MLD, that is, the AP MLD that has already established a connection with the STA MLD, or the AP MLD with which the STA MLD was associated prior to roaming.

The first target link refers to at least one link corresponding to the STA MLD and the target AP MLD, that is, at least one link between the STA MLD and the target AP MLD. The target AP MLD is the AP MLD that the STA MLD intends to associate with, that is, the AP MLD that the STA MLD intends to establish a connection with, or the AP MLD that the STA MLD is to associate with, or the AP MLD that the STA MLD is to establish a connection with, or the AP MLD with which the STA MLD is to be associated upon roaming.

Transitioning the first source link to the first target link may be that the STA MLD roams from the source AP MLD corresponding to the first source link to the target AP MLD corresponding to the first target link.

The power control information is used to control transmit power of candidate AP MLDs or a target AP MLD. Alternatively, the power control information is used to adjust transmit power of candidate AP MLDs or a target AP MLD. The target AP MLD is an AP MLD in the candidate AP MLDs.

In some embodiments, the STA MLD adopts a soft transitioning-based method for link transition. The soft transition refers to link transition implemented using the seamless roaming technology. During the process in which the STA MLD roams from the source AP MLD to the target AP MLD, the STA MLD maintains the connection between the STA MLD and the source AP MLD; that is, at least one link between the STA MLD and the source AP MLD keeps in an operating state. Meanwhile, the STA MLD establishes a connection with the target AP MLD; that is, at least one new link is established between the STA MLD and the target AP MLD.

In summary, in the method according to the embodiments of the present disclosure, the source AP MLD controls the transmit power of the candidate AP MLDs by transmitting the power control information during the process of link transition, such that the first target link between the STA MLD and the target AP MLD has the great reliability. Moreover, during the process of transitioning the first source link to the first target link, maintaining the connection between the STA MLD and the source AP MLD may prevent the problem of the interruption in data transmission that may occur during link transition, reduce the likelihood of the interruption in data transmission perceived by the user, and enhance the user experience.

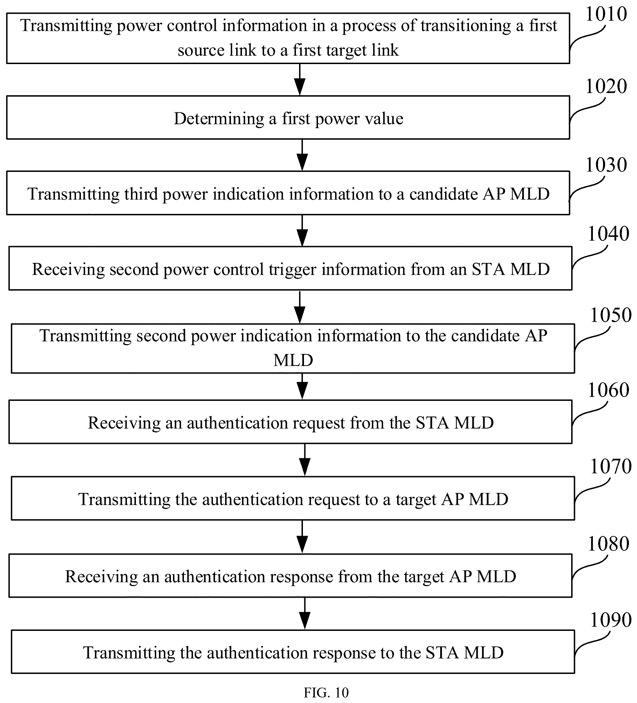

FIG. 10 illustrates a schematic flowchart of a method for link transition according to some exemplary embodiments of the present disclosure. Taking the example where the method is performed by a source AP MLD, the method includes at least part of the following processes.

**In S1010,** power control information is transmitted in a process of transitioning a first source link to a first target link.

In some embodiments, S1010 is implemented as S1010a and S1010b.

In S1010a, first power control trigger information from the STA MLD is received.

In some embodiments, the power control information includes the first power control trigger information used to trigger the source AP MLD to transmit first power indication information to the candidate AP MLD. The first power indication information is used to adjust or control the transmit power of the candidate AP MLDs.

In some embodiments, the first power control trigger information is transmitted over a second source link, and the second source link is at least one link, other than the first source link, corresponding to the STA MLD and the source AP MLD.

In some embodiments, the first power control trigger information is carried in a third frame for transmission. The third frame includes at least one of a Category field, an Action field, a Link ID field, a Dialog Token field, an Element ID field, a Length field, an Element ID Extension field, an AP MLD Information field, or the like.

In some embodiments, the AP MLD Information field includes at least one of an AP MLD Address field or a Power field.

In some embodiments, the value of the Action field includes at least one of:

- · a first value, indicating that the third frame is used to indicate the first power control trigger information;
- · a second value, indicating that the third frame includes a power upload indication;
- · a third value, indicating that the third frame includes a target AP MLD confirmation indication; or
- · a fourth value, indicating that the third frame includes a target AP MLD association completion indication.

In S1010b, first power indication information is transmitted to a candidate AP MLD.

In some embodiments, the first power indication information is carried in a fourth frame for transmission. The fourth frame includes at least one of a Trigger Type field, an UL Length field, a Trigger Dependent Common Info field, or a Reserved field.

In some embodiments, the Trigger Dependent Common Info field includes at least one of a Link ID field, a Power field, or a Life Time field. The Link ID field indicates the ID of the first target link, the Power field indicates the transmit power value that the candidate AP MLD needs to adjust to on the first target link, and the Life Time field indicates a duration within which the candidate AP MLD needs to use the required adjusted transmit power value.

**In S1020**, a first power value is determined.

The first power value is the transmit power value required by the STA MLD on the first target link when the STA MLD establishes the first target link with the target AP MLD.

In some embodiments, the power information of the candidate AP MLD includes at least one of a fourth power value, a fifth power value, or a third power value. The source AP MLD receives the power information of the candidate AP MLD from the STA MLD, a sixth power value, and a seventh power value. The sixth power value is the expected receive power value of the STA MLD on the first target link. The source AP MLD calculates a first power value and a second power value based on the power information of the candidate AP MLD, the sixth power value, and the seventh power value. The source AP MLD transmits the first power value and the second power value to the STA MLD.

The third power value is the maximum transmit power value of the candidate AP MLD on the first target link, that is, the third power value is the maximum transmit power value that the candidate AP MLD may adopt on the first target link when satisfying regulatory requirements and based on its own state (for example, the power supply state). The fourth power value is the transmit power value adjusted by the candidate AP MLD based on power control information, that is, the fourth power value is the transmit power value that the candidate AP MLD adjusts to on the first target link based on the power control information, or the current transmit power of the candidate AP MLD on the first target link. The fifth power value is the target receive power value of the candidate AP MLD on the first target link, that is, the fifth power value is the receive power that the candidate AP MLD expects to measure on the first target link when receiving a signal from a transmitter (such as the STA MLD). The sixth power value is the expected receive power value of the STA MLD on the first target link. The seventh power value is the receive power value measured by the STA MLD on the first target link when the STA MLD receives a signal from a transmitter (such as the candidate AP MLD).

In some embodiments, the source AP MLD receives the first power value and the second power value from the STA MLD.

**In S1030,** third power indication information is transmitted to the candidate AP MLD.

The third power indication information is used to instruct the candidate AP MLD to maintain the transmit power adjusted based on the first power indication information.

**In S1040,** second power control trigger information from the STA MLD is received.

The second power control trigger information is used to trigger the source AP MLD to transmit second power indication information to another candidate AP MLD.

**In S1050,** second power indication information is transmitted to the candidate AP MLD.

The candidate AP MLDs include the target AP MLD and another candidate AP MLD. The another candidate AP MLD is an AP MLD in the candidate AP MLDs other than the target AP MLD.

In some embodiments, the STA MLD transmits the second power indication information to the another candidate AP MLD; alternatively, the STA MLD transmits the second power indication information to the another candidate AP MLD and the target AP MLD.

The second power indication information is used to restore the transmit power of the candidate AP MLDs, that is, to restore the transmit power of the candidate AP MLDs from the fourth power value to the transmit power value prior to receiving the first power indication information. In the process, the transmit power of the another candidate AP MLD is restored to the original transmit power, such that the power consumption of the another candidate AP MLD is reduced, and thus the negative impacts of link transition on the communication system is mitigated.

**In S1060,** an authentication request from the STA MLD is received.

The authentication request is used for authentication between the STA MLD and the target AP MLD to establish the first target link.

**In S1070,** the authentication request is transmitted to the target AP MLD.

The source AP MLD synchronizes the authentication request from the STA MLD to the target AP MLD.

**In S1080,** an authentication response from the target AP MLD is received.

The authentication response is used to indicate the response of the target AP MLD to the authentication request from the STA MLD.

**In S1090,** the authentication response is transmitted to the STA MLD.

The source AP MLD synchronizes the authentication response from the target AP MLD to the STA MLD.

It should be understood that, in the embodiments of the present disclosure, S1030 to S1090 are optional processes. S1040 and S1050 may be combined into one process, S1060 and S1070 may be combined into one process, and S1080 and S1090 may be combined into one process. The execution order of each process may be adaptively adjusted according to specific circumstances. For example, S1030 may be performed prior to S1020, or S1040 and S1050 may be performed upon S1090.

In summary, in the method according to the embodiments of the present disclosure, the source AP MLD controls the transmit power of the candidate AP MLDs by transmitting the power control information during the process of link transition, such that the first target link between the STA MLD and the target AP MLD has the great reliability. Moreover, during the process of transitioning the first source link to the first target link, maintaining the connection between the STA MLD and the source AP MLD may prevent the problem of the interruption in data transmission that may occur during link transition, reduce the likelihood of the interruption in data transmission perceived by the user, and enhance the user experience.

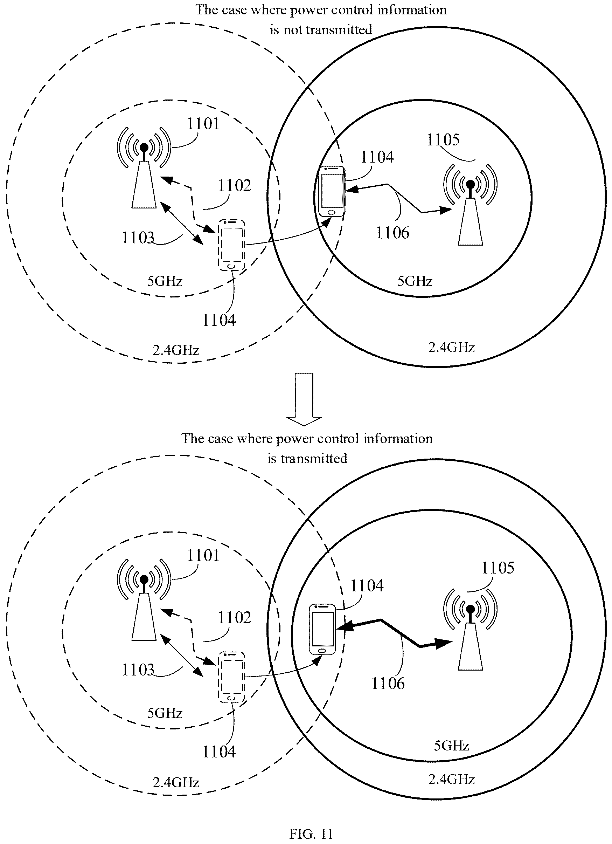

FIG. 11 illustrates a schematic diagram of a method for link transition according to some exemplary embodiments of the present disclosure. It is assumed that two links, that is, the first source link 1102 and the second source link 1103, are established between the STAMLD and the source AP MLD 1101. The embodiments of the present disclosure are illustrated using an example where the first source link 1102 is a link operating at 5 GHz and the second source link 1103 is a link operating at 2.4 GHz. However, the operating frequency bands of the first source link 1102 and the second source link 1103 are not limited. The first source link 1102 and the second source link 1103 may operate in frequency bands other than 2.4 GHz and 5 GHz, such as the millimeter wave frequency band, and the 6 GHz band. Alternatively, the first source link 1102 and the second source link 1103 may operate in the same frequency band.

In the case where the STA 1104 in the STA MLD moves, the link corresponding to the STA 1104 needs to be transitioned to ensure the communication quality. Exemplarily, in the case where the STA 1104 reaches the signal overlapping area of the candidate AP MLD 1105 and the source AP MLD 1101, the STA 1104 maintains the connection of the second source link 1103 with the source AP MLD 1101, and simultaneously establishes a first target link 1106 with the candidate AP MLD 1105. During the process of transitioning the first source link 1102 to the first target link 1106, the STA 1104 adjusts the transmit power of the candidate AP MLDs 1105 by transmitting the power control information, for example, by increasing the transmit power of the candidate AP MLDs 1105. Compared with the case where no power control information is transmitted, the transmission of the power control information significantly improves the reliability of the first target link 1106 between the STA 1104 and the candidate AP MLD 1105.

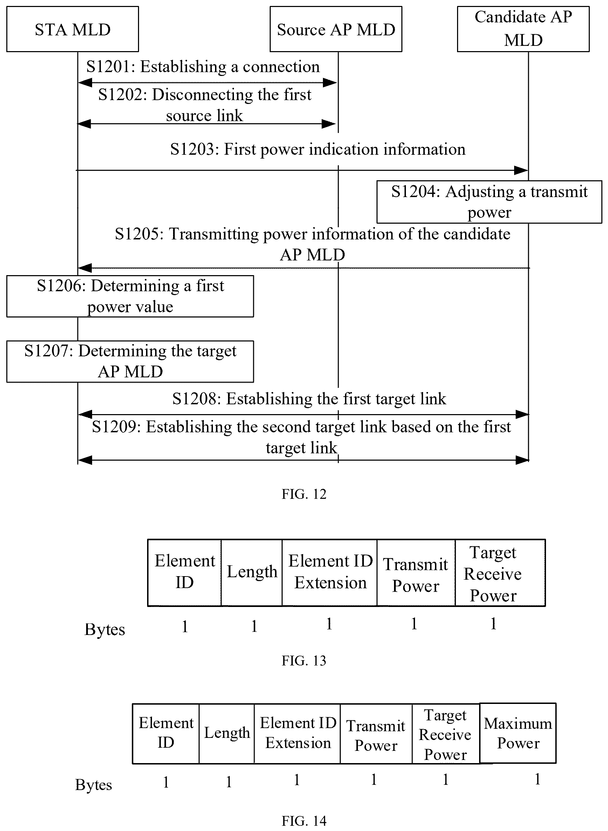

FIG. 12 illustrates a schematic flowchart of a method for link transition according to some exemplary embodiments of the present disclosure. Taking the example where the method is performed by an STA MLD, a source AP MLD, and a candidate AP MLD, the method includes at least part of the following processes.

**In S1201,** a connection is established between the STA MLD and the source AP MLD.

The STA MLD and the source AP MLD are in an associated state, and signaling, data, and frames may be transmitted between the STA MLD and the source AP MLD.

**In S1202,** a first source link between the STA MLD and the source AP MLD is disconnected.

The embodiments of the present disclosure are illustrated using an example where at least a first source link and a second source link exist between the STA MLD and the source AP MLD. The first source link is at least one link between the STA MLD and the source AP MLD, and the second source link is at least one other link between the STA MLD and the source AP MLD.

In some embodiments, the STA MLD disconnects the first source link to the source AP MLD autonomously; alternatively, in the case where the communication quality of the first source link is lower than a first threshold, the STA MLD disconnects the first source link; alternatively, in the case where the communication quality of the first source link is lower than a second threshold, the first source link is automatically disconnected.

The communication quality may be represented by at least one of a received signal strength indicator (RSSI) value, a packet loss rate, a retransmission rate, a number of lost packets, a number of retransmissions, a number of transmission failures, or the like.

**In S1203**, the STA MLD transmits first power indication information to the candidate AP MLD.

The candidate AP MLD is an AP MLD different from the source AP MLD. The candidate AP MLD includes at least one of: an AP MLD located on the same physical device as the source AP MLD, an AP MLD located within the signal coverage of the source AP MLD, an AP MLD located within the wireless medium coverage of the source AP MLD, an AP MLD located within the signal coverage of the STA MLD, an AP MLD located within the wireless medium coverage of the STA MLD, or a pre-configured candidate AP MLD.

The first power indication information is used to adjust or control the transmit power of the candidate AP MLDs.

Adjusting or controlling the transmit power of the candidate AP MLDs includes at least one of: increasing the transmit power of the candidate AP MLDs, decreasing the transmit power of the candidate AP MLDs, maintaining the transmit power of the candidate AP MLDs, or the like. The embodiments of the present disclosure are illustrated using an example where the first power indication information is used to increase the transmit power of the candidate AP MLDs.

In some embodiments, the STA MLD, when performing S1203, initiates active scanning of the first target link; or, the STA MLD, upon performing S1203, initiates active scanning of the first target link; or, performing S1203 by the STA MLD means that the STA MLD initiates active scanning of the first target link.

In some embodiments, the first power indication information further indicates the transmit power of the STA MLDs.

In some embodiments, the first power indication information is carried in a first frame for transmission.

FIG. 13 illustrates a schematic diagram of a format of a first frame according to some exemplary embodiments of the present disclosure. The number below each field indicates the number of bytes or bits for the field. The first frame includes at least one of an Element ID field, a Length field, an Element ID Extension field, a TX Power field, or a Target Receive Power field.

In some embodiments, in the case where a value of the Element ID field is value A and/or a value of the Element ID Extension field is value B, the frame to which the Element ID field and/or the Element ID Extension field belong is the first frame. Exemplarily, value A is 255 or another reserved value, and value B is 98 or another reserved value.

In some embodiments, the Target Receive Power field in the first frame is used to indicate the expected receive power of the STA MLD, $Target_{pwr}$, and the calculation formula thereof is:

$$Target_{pwr} = -110 + F_{val} \tag{1}$$

$F_{val}$ represents the value of the Target Receive Power field, a value range of $F_{val}$ is [0, 90], and values greater than 90 may be used as reserved values.

In some embodiments, the first frame includes a probe request frame.

It should be understood that the frame format illustrated in FIG. 13 is merely provided as an example rather than a limitation. The first frame may further carry fewer or more fields. For example, the first frame carries only the TX Power field and the Target Receive Power field; or carries only the Element ID field, the Length field, the TX Power field, and the Target Receive Power field; or further carries the Reserved field in addition to the five fields illustrated in FIG. 13, and so on. The order of the fields illustrated in FIG. 13 may be adjusted according to actual conditions. For example, the Target Receive Power field precedes the TX Power field, the Element ID Extension field precedes the Length field, or the Length field follows the Target Receive Power field, and so on. The number of bytes for each field illustrated in FIG. 13 is variable. For example, the TX Power field occupies 2 bytes, the Target Receive Power field occupies 2 bytes, or the Element ID field occupies 0 bytes, and so on. The names of the fields illustrated in FIG. 13 are variable. For example, the TX Power field may also be referred to as the Power field, the Target Receive Power field may also be referred to as the expected receive Power field or Power field, and so on.

In some embodiments, S1203 is performed by the first STA. The first STA is an STA in the STA MLD that corresponds to the first source link, that is, an STA in the STA MLD that corresponds to the first target link.

**In S1204,** the candidate AP MLD adjusts the transmit power.

The candidate AP MLD increases, based on the received first power indication information, its own transmit power to the fourth power value.

In some embodiments, the candidate AP MLD calculates the maximum transmit power value, that is, the third power value, based on the current network state.

In some embodiments, the candidate AP MLD calculates, based on the value of the TX Power field and the value of the Target Receive Power field in the received first frame and the RSSI information corresponding to the first frame, the second power value. The second power value is the transmit power value required by the candidate AP MLD when establishing a link between the candidate AP MLD and the STA MLD.

**In S1205**, the candidate AP MLD transmits power information of the candidate AP MLD.

The power information of the candidate AP MLD includes at least one of the fourth power value, the fifth power value, the third power value, or the second power value. The fourth power value is the transmit power value that the candidate AP MLD adjusts to on the first target link based on the power control information, that is, the current transmit power of the candidate AP MLDs on the first target link. The fifth power value is the target receive power value of the candidate AP MLD on the first target link, that is, the fifth power value is the receive power that the candidate AP MLD expects to measure on the first target link when receiving a signal from a transmitter (such as STA MLD). The third power value is the maximum transmit power value of the candidate AP MLD on the first target link; that is, the third power value is the maximum transmit power value that the candidate AP MLD may adopt on the first target link when satisfying regulatory requirements and based on its own state (for example, the power supply state).

The candidate AP MLD transmits the power information of the candidate AP MLD using the fourth power value.

In some embodiments, the power information of the candidate AP MLD is carried in the second frame for transmission.

FIG. 14 illustrates a schematic diagram of a format of a second frame according to some exemplary embodiments of the present disclosure. The number below each field indicates the number of bytes or bits for the field. The second frame includes at least one of an Element ID field, a Length field, an Element ID Extension field, a TX Power field, a Target Receive Power field, or a Max Power field.

In some embodiments, in the case where the value of the Element ID field is value A and/or the value of the Element ID Extension field is value C, the frame to which the Element ID field and/or the Element ID Extension field belong is the second frame. Exemplarily, value A is 255 or another reserved value, and value C is 99 or another reserved value.

In some embodiments, the Target Receive Power field in the second frame is used to indicate the expected receive power of the candidate AP MLD. For the calculation formula, reference may be made to the formula (1).

In some embodiments, the Max Power field in the second frame is used to indicate the maximum transmit power of the candidate AP MLDs.

In some embodiments, the second frame includes a probe response frame.

It should be understood that the frame format illustrated in FIG. 14 is merely provided as an example rather than a limitation. The second frame may further carry fewer or more fields. For example, the second frame carries only the TX Power field and the Target Receive Power field; or carries only the TX Power field, the Target Receive Power field, and the Max Power field; or carries only the Element ID field, the Length field, the TX Power field, the Target Receive Power field, and the Max receive Power field; or further carries the Reserved field in addition to the six fields illustrated in FIG. 14, and so on. The order of the fields illustrated in FIG. 14 may be adjusted according to actual conditions. For example, the Target Receive Power field precedes the TX Power field, the Element ID Extension field precedes the Length field, the Length field follows the Target Receive Power field, or the Max Power field precedes the TX Power field, and so on. The number of bytes for each field illustrated in FIG. 14 is variable. For example, the TX Power field occupies 2 bytes, the Target Receive Power field occupies 2 bytes, the Max Power field occupies 0 bytes, or the Element ID field occupies 0 bytes, and so on. The names of the fields illustrated in FIG. 14 are variable. For example, the TX Power field may also be referred to as the Power field, the Target Receive Power field may also be referred to as the expected receive Power field or Power field, or the Max Power field may also be referred to as the acceptable power threshold field or acceptable Max Power field, and so on.

In some embodiments, S1205 is performed by the first AP. The first AP is an AP in the candidate AP MLD that corresponds to the first target link.

**In S1206,** the STA MLD determines the first power value based on the power information of the candidate AP MLD.

The STA MLD scans the power information of the candidate AP MLD, that is, the STA MLD scans the second frame.

The first power value is the transmit power value required by the STA MLD on the first target link when the STA MLD establishes the first target link with the target AP MLD.

In some embodiments, the power information of the candidate AP MLD includes at least one of the fifth power value, the third power value, or the second power value; the STA MLD calculates, based on at least one of the fifth power value, the third power value, or the second power value, the first power value.

It is assumed that the first power value is Ps and the second power value is Pa. The calculation formulas for the first power value and the second power value are:

$$Ps = PL + TargetRx_{pwr}^{AP} \tag{2}$$

$$Pa = PL + TargetRx_{pwr}^{STA} \tag{3}$$

$$PL = Tx_{pwr}^{AP} - Rx_{pwr} \tag{4}$$

$PL$ represents the path loss, $TargetRx_{pwr}^{AP}$ represents the expected receive power of the candidate AP MLD when establishing the first target link; $TargetRx_{pwr}^{STA}$ represents the expected receive power of the STA MLD when establishing the first target link; $Tx_{pwr}^{AP}$ represents the transmit power of the second frame, that is, the transmit power used by the candidate AP MLD to transmit the second frame; $Rx_{pwr}$ represents the receive power of the second frame, that is, the receive power used by the STA MLD to receive the second frame.

**In S1207,** a target AP MLD is determined.

In some embodiments, the target AP MLD is determined based on the second power value and the third power value.

In some embodiments, a target AP MLD is determined from the candidate AP MLDs based on the magnitude relationship between the second power value and the third power value.

Exemplarily, in the case where the second power value is less than or equal to the third power value, i.e., $Pa \leq Pmax$, the candidate AP MLD corresponding to the third power value greater than or equal to the second power value is the target AP MLD, and the STA MLD may establish the first target link with the target AP MLD.

In some embodiments, a target AP MLD is determined from the candidate AP MLDs based on the priority score. The target AP MLD is the AP MLD with the highest priority score in the candidate AP MLDs. The priority score is determined based on the power information of the candidate AP MLD and the second power value.

In some embodiments, the priority score is a difference between a first product and a second sum value. The first product is a product of the third power value corresponding to the candidate AP MLD and the first weight, and the second sum value is a sum of a second product and a third product. The second product is a product of a path loss and a second weight, and the third product is a product of the second power value and a third weight. The sum of the first weight, the second weight, and the third weight is 1 or 100%.

It is assumed that the first weight is α, the second weight is β, the third weight is γ, the third power value is Pmax, the path loss is PL, and the second power value is Pa, then the calculation formula for the priority score *Score* is:

$$Score = \alpha \cdot Pmax - \beta \cdot PL - \gamma \cdot Pa \tag{5}$$

α + β + γ = 1, or α + β + γ = 100%. Moreover, the value of a is within [0, 1], the value of β is within [0, 1], and the value of γ is within [0, 1].

In some embodiments, the STA MLD may further transmit third power indication information to the candidate AP MLD; and the third power indication information is used to instruct the candidate AP MLD to maintain the transmit power adjusted based on the first power indication information.

In some embodiments, the STA MLD transmits the third power indication information to the candidate AP MLD prior to performing S1207, or transmits the third power indication information to the candidate AP MLD prior to performing S1206, or transmits the third power indication information to the candidate AP MLD upon performing S1206, or repeats S1206 and transmits the third power indication information to the candidate AP MLD prior to performing S1207.

**In S1208,** the first target link is established.

Based on the first power value and the second power value, the first target link is established between the STA MLD and the target AP MLD.

Exemplarily, S1208 includes S1208a, S1208b, S1208c, and S1208d.

In S1208a, the STA MLD transmits an authentication request.

In some embodiments, the STA MLD transmits the authentication request to the source AP MLD, and the source AP MLD transmits the authentication request to the target AP MLD; or the STA MLD transmits the authentication request to the target AP MLD.

In some embodiments, the STA MLD transmits the authentication request to the target AP MLD using the first power value.

In S1208b, the target AP MLD transmits an authentication response.

In some embodiments, the target AP MLD transmits the authentication response to the source AP MLD, and the source AP MLD transmits the authentication response to the STA MLD; or the target AP MLD transmits the authentication response to the STA MLD.

In some embodiments, the target AP MLD transmits the authentication response to the STA MLD using the second power value.

In S1208c, the STA MLD transmits a reassociation request to the target AP MLD.

In some embodiments, the STA MLD transmits the reassociation request to the target AP MLD using the first power value.

In S1208d, the target AP MLD transmits a reassociation response to the STA MLD.

In some embodiments, the target AP MLD transmits the reassociation response to the STA MLD using the second power value.

For the relevant content of the authentication request, the authentication response, the reassociation request, and the reassociation response, reference may be made to the relevant content in the Institute of Electrical and Electronics Engineers (IEEE) 802.11r protocol.

**In S1209,** a second target link is established based on the first target link.

In some embodiments, the STA MLD disconnects the second source link to the source AP MLD autonomously; alternatively, in the case where the communication quality of the second source link is lower than a third threshold, the STA MLD disconnects the second source link; alternatively, in the case where the communication quality of the second source link is lower than a fourth threshold, the second source link is automatically disconnected.

In some embodiments, the STA MLD transmits a disassociation indication to the source AP MLD; the disassociation indication is used to disassociate the STA MLD from the source AP MLD and/or disconnect the second source link.

In some embodiments, with the assistance of the first target link, the STA MLD establishes the second target link with the target AP MLD.

In some embodiments, the STA MLD establishes the second target link with the target AP MLD using the FT technology. Exemplarily, the STA MLD transmits an authentication request to the target AP MLD over the first target link, the target AP MLD transmits an authentication response to the STA MLD over the first target link, the STA MLD transmits a reassociation request to the target AP MLD over the first target link, and the target AP MLD transmits a reassociation response to the STA MLD over the first target link, such that the second target link is established, that is, the second source link is transitioned to the second target link.

It should be understood that, in the embodiments of the present disclosure, S1209 is an optional process. S1202 and S1203 may be combined into one process, and S1204 and S1205 may be combined into one process. The execution order of each process may be adaptively adjusted according to specific circumstances. S1206 may be repeatedly performed; that is, prior to determining the target AP MLD, the STA MLD may scan the power information of the candidate AP MLD in real time and calculate the first power value multiple times, until the target AP MLD is determined.

It should be understood that some or all of the processes in the method for link transition illustrated in FIG. 12 may be performed by the target AP MLD, and the target AP MLD belongs to the candidate AP MLD. Exemplarily, the target AP MLD may perform S1204, S1205, S1208, and S1209, and may also participate in performing S1206 and S1207.

In summary, in the method according to the embodiments of the present disclosure, the STA MLD controls the transmit power of the candidate AP MLDs by transmitting the power control information during the process of link transition, the target AP MLD is determined from the candidate AP MLDs by active scanning, and the first target link is established by controlling the transmit power of the target AP MLD and the transmit power of the STA MLD, such that the established first target link has the great reliability. Moreover, during the process of transitioning the first source link to the first target link, maintaining the connection between the STA MLD and the source AP MLD may prevent the problem of the interruption in data transmission that may occur during link transition, reduce the likelihood of the interruption in data transmission perceived by the user, and enhance the user experience. In addition, the STA MLD may further establish the second target link based on the established first target link, such that roaming from the source AP MLD to the target AP MLD possesses the great reliability and the great simplicity, the efficiency and stability of the communication system are greatly improved, and the communication quality is ensured.

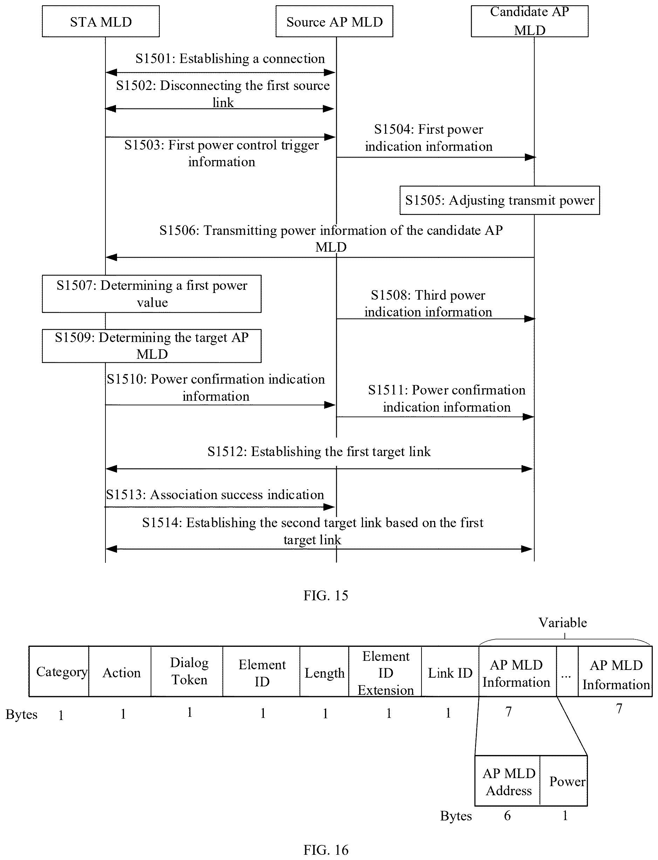

FIG. 15 illustrates a schematic flowchart of a method for link transition according to some exemplary embodiments of the present disclosure. Taking the example where the method is performed by an STA MLD, a source AP MLD, and a candidate AP MLD, the method includes at least part of the following processes.

**In S1501,** a connection is established between the STA MLD and the source AP MLD.

The STA MLD and the source AP MLD are in an associated state, and signaling, data, and frames may be transmitted between the STA MLD and the source AP MLD.

**In S1502,** a first source link between the STA MLD and the source AP MLD is disconnected.

The embodiments of the present disclosure are illustrated using an example where at least a first source link and a second source link exist between the STA MLD and the source AP MLD. The first source link is at least one link between the STA MLD and the source AP MLD, and the second source link is at least one other link between the STA MLD and the source AP MLD.

In some embodiments, the STA MLD disconnects the first source link to the source AP MLD autonomously; alternatively, in the case where the communication quality of the first source link is lower than a first threshold, the STA MLD disconnects the first source link; alternatively, in the case where the communication quality of the first source link is lower than a second threshold, the first source link is automatically disconnected.

The communication quality may be represented by at least one of an RSSI value, a packet loss rate, a retransmission rate, a number of lost packets, a number of retransmissions, a number of transmission failures, or the like.

**In S1503,** the STA MLD transmits first power control trigger information to the source AP MLD.

The first power control trigger information is used to trigger the source AP MLD to transmit first power indication information to the candidate AP MLD. The first power indication information is used to adjust or control the transmit power of the candidate AP MLDs.

Adjusting or controlling the transmit power of the candidate AP MLDs includes at least one of: increasing the transmit power of the candidate AP MLDs, decreasing the transmit power of the candidate AP MLDs, maintaining the transmit power of the candidate AP MLDs, or the like. The embodiments of the present disclosure are illustrated using an example where the first power indication information is used to increase the transmit power of the candidate AP MLDs.

In some embodiments, the STA MLD, when performing S1503, initiates passive scanning of the first target link; or, the STA MLD, upon performing S1503, initiates passive scanning of the first target link; or, performing S1503 by the STA MLD means that the STA MLD initiates passive scanning of the first target link.

In some embodiments, the STA MLD transmits the first power control trigger information to the source AP MLD over the second source link.

In some embodiments, the first power control trigger information is carried in a third frame for transmission.

FIG. 16 illustrates a schematic diagram of a format of a third frame according to some exemplary embodiments of the present disclosure. The number below each field indicates the number of bytes or bits for the field. The third frame includes at least one of a Category field, an Action field, a Link ID field, a Dialog Token field, an Element ID field, a Length field, an Element ID Extension field, an AP MLD Information field, or the like. The length of the AP MLD Information field is variable.

In some embodiments, in the case where a value of the Category field is value D, the frame to which the Category field belongs is the third frame. Exemplarily, the value range of value D is [30,125].

In some embodiments, the Link ID field is used to indicate information of the first target link, for example, to indicate at least one of a frequency band of the first target link, a link ID of the first target link, a link index of the first target link, or the like.

In some embodiments, a value of the Action field is a first value to indicate that the third frame is used to indicate the first power control trigger information. In this case, a length of the AP MLD Information field is 0.

In some embodiments, a value of the Action field is a second value to indicate that the third frame includes a power upload indication. In this case, the AP MLD Information field is used to indicate information of at least one candidate AP MLD scanned by the STA MLD.

In some embodiments, the AP MLD Information field includes an AP MLD Address field and a Power field. The AP MLD Address field is used to indicate the MAC address of at least one candidate AP MLD scanned by the STA MLD. The Power field is used to indicate the target transmit power value adjusted by at least one candidate AP MLD scanned by the STA MLD, that is, the transmit power value that should be used by the at least one candidate AP MLD scanned by the STA MLD, or the transmit power value of the at least one candidate AP MLD scanned by the STA MLD as expected by the STA MLD.

In some embodiments, the unit of the target transmit power value adjusted by at least one candidate AP MLD scanned by the STA MLD is dBm/20MHz, and the calculation formula thereof is:

$$P = -20 + F_{val}' \qquad (6)$$

$F_{val}'$ represents the value of the Power field, a value range of $F_{val}'$ is [0, 60], and values greater than 60 may be used as reserved values.

In some embodiments, the value of the Action field is a third value to indicate that the third frame includes a target AP MLD confirmation indication. In this case, the AP MLD Information field includes information of the target AP MLD. For example, the AP MLD Address field in the AP MLD Information field is used to indicate the MAC address of the target AP MLD, and the Power field in the AP MLD Information field is used to indicate the transmit power value of the target AP MLD.

In some embodiments, the value of the Action field is a fourth value to indicate that the third frame includes a target AP MLD association completion indication. In this case, the AP MLD Information field includes information of the target AP MLD. For example, the AP MLD Address field in the AP MLD Information field is used to indicate the MAC address of the target AP MLD; the Power field in the AP MLD Information field is used to indicate the transmit power value of the target AP MLD, or the AP MLD Information field is a Reserved field.

It should be understood that the frame format illustrated in FIG. 16 is merely provided as an example rather than a limitation. The third frame may also carry fewer or more fields. For example, the third frame carries only the Category field, the Action field, and the Link ID field; or carries only the Category field, the Action field, and the AP MLD Information field; or carries only the Element ID field, the Length field, the Link ID field, and the AP MLD Information field; or, further carries the Reserved field in addition to all the fields illustrated in FIG. 16, and so on. The order of the fields illustrated in FIG. 16 may be adjusted according to actual conditions. For example, the AP MLD Information field precedes the Link ID field, the Element ID Extension field precedes the Length field, the Length field follows the AP MLD Information field, or the AP MLD Information field precedes the Element ID field, and so on. The number of bytes for each field illustrated in FIG. 16 is variable. For example, the Power field occupies 2 bytes, the AP MLD Information field occupies 8 bytes, or the Element ID Extension field occupies 0 bytes, and so on. The names of the fields illustrated in FIG. 16 are variable. For example, the Power field may also be referred to as the TX Power field, the Target Receive Power field, the expected receive Power field, or Max Power field, or the Link ID field may also be referred to as the target link field, and so on.

**In S1504**, the source AP MLD transmits first power indication information to the candidate AP MLD.

The candidate AP MLD is an AP MLD different from the source AP MLD. The candidate AP MLD includes at least one of: an AP MLD located on the same physical device as the source AP MLD, an AP MLD located within the signal coverage of the source AP MLD, an AP MLD located within the wireless medium coverage of the source AP MLD, an AP MLD located within the signal coverage of the STA MLD, an AP MLD located within the wireless medium coverage of the STA MLD, or a pre-configured candidate AP MLD.

In some embodiments, the first power indication information is carried in a fourth frame for transmission.

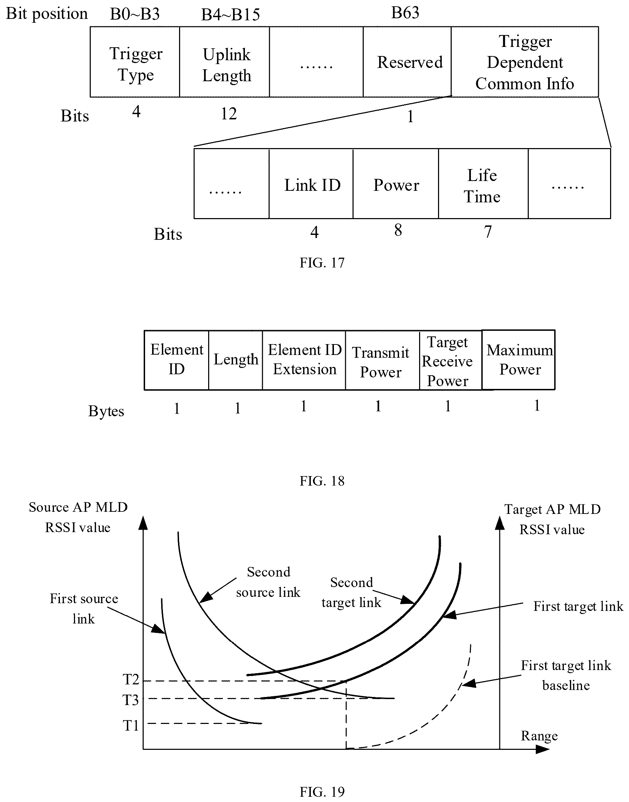

FIG. 17 illustrates a schematic diagram of a format of a fourth frame according to some exemplary embodiments of the present disclosure. The number below each field indicates the number of bytes or bits for the field. The fourth frame includes at least one of a Trigger Type field, an UL Length field, a Trigger Dependent Common Info field, or a Reserved field.

In some embodiments, in the case where a value of the Trigger Type field is value E, the frame to which the Trigger Type field belongs is used to indicate power increase. That is, the fourth frame is used to increase the transmit power of the candidate AP MLDs. Exemplarily, the value of value E includes 8, 9, 10, 11, or other reserved values.

In some embodiments, in the case where a value of the Trigger Type field is value F, the frame to which the Trigger Type field belongs is used to indicate power maintenance. That is, the fourth frame is used to maintain the transmit power of the candidate AP MLDs. Exemplarily, the value of value F includes 9, 8, 10, 11, or other reserved values.

In some embodiments, in the case where a value of the Trigger Type field is value G, the frame to which the Trigger Type field belongs is used to indicate power confirmation. That is, the fourth frame is used to confirm the transmit power of the candidate AP MLDs. Exemplarily, the value of value G includes 10, 8, 9, 11, or other reserved values.

In some embodiments, in the case where a value of the Trigger Type field is value H, the frame to which the Trigger Type field belongs is used to indicate power recovery. That is, the fourth frame is used to recover or restore the transmit power of the candidate AP MLDs. Exemplarily, the value of value H includes 11, 8, 9, 10, or other reserved values.

In some embodiments, the Trigger Dependent Common Info field includes at least one of a Link ID field, a Power field, or a Life Time field.

In some embodiments, a value of the Link ID field is used to indicate the first target link. Exemplarily, the value range of the Link ID field is [0, 15]. In the case where the value of the Link ID field is 1, the link with a link ID of 1 is the first target link; in the case where the value of the Link ID field is 12, the link with a link ID of 12 is the first target link, and so on. It should be understood that the value range of the Link ID field may also be other value ranges, such as [1, 16], [0, 10], or [2, 18], and each value within the range may indicate one link in a one-to-one correspondence.

In some embodiments, the Power field is used to instruct the candidate AP MLD to perform power adjustment. For the meaning, the value, or the calculation method, reference may be made to the relevant content in the third frame.

In some embodiments, the Life Time field is used to indicate the effective time of the fourth frame, that is, the life time of the power adjustment information indicated by the fourth frame. In some embodiments, the value range of the Life Time field is [0, 127], and the unit of the effective time of the fourth frame is ms. It should be understood that the value range of the Life Time field may be other value ranges, such as [1, 128], [0, 107], or [2, 129], and each value within the range may indicate one effective time in a one-to-one correspondence.

It should be understood that the frame format illustrated in FIG. 17 is merely provided as an example rather than a limitation. The fourth frame may further carry fewer or more fields. For example, the fourth frame carries only the Trigger Type field and the Trigger Dependent Common Info field; or carries only the Trigger Type field, the Trigger Dependent Common Info field, and the Reserved field; or carries only the Trigger Type field, the Link ID field, and the Power field; or carries only the Life Time field, the Link ID field, the Power field, and the Reserved field; or further carries the TX Power field in addition to all fields illustrated in FIG. 17, and so on. The order of the fields illustrated in FIG. 17 may be adjusted according to actual circumstances. For example, the Life Time field precedes the Link ID field, the Power field precedes the Link ID field, the Trigger Dependent Common Info field precedes the Reserved field, or the Trigger Dependent Common Info field precedes the UL Length field, and so on. The number of bytes for each field illustrated in FIG. 17 is variable. For example, the Power field occupies 6 bytes; or the Life Time field occupies 4 bytes, or the Link ID field occupies 1 byte; or the Reserved field occupies 0 bytes, and so on. The names of the fields illustrated in FIG. 17 are variable. For example, the Power field may also be referred to as the TX Power field, the Target Receive Power field, the expected receive Power field, or the Max Power field, the Link ID field may also be referred to as the target link field, or the Life Time field may also be referred to as the valid time field, the effective time field, or the timer field, and so on.

**In S1505,** the candidate AP MLD adjusts the transmit power.

The candidate AP MLD increases, based on the received first power indication information, its own transmit power to the fourth power value.

In some embodiments, the candidate AP MLD calculates the maximum transmit power value, that is, the third power value, based on the current network state.

**In S1506**, the candidate AP MLD transmits power information of the candidate AP MLD.

The power information of the candidate AP MLD includes at least one of the fourth power value, the fifth power value, or the third power value. The fifth power value is the expected receive power value of the candidate AP MLD.

The candidate AP MLD transmits the power information of the candidate AP MLD using the fourth power value.

In some embodiments, the power information of the candidate AP MLD is carried in the fifth frame for transmission.

FIG. 18 illustrates a schematic diagram of a format of a fifth frame according to some exemplary embodiments of the present disclosure. The number below each field indicates the number of bytes or bits for the field. The fifth frame includes at least one of an Element ID field, a Length field, an Element ID Extension field, a TX Power field, a Target Receive Power field, or a Max Power field.

In some embodiments, in the case where the value of the Element ID field is value J and/or the value of the Element ID Extension field is value K, the frame to which the Element ID field and/or the Element ID Extension field belong is the fifth frame.

In some embodiments, the Target Receive Power field in the fifth frame is used to indicate the expected receive power of the candidate AP MLD. For the calculation formula, reference may be made to the formula (1).

In some embodiments, the Max Power field in the fifth frame is used to indicate the maximum transmit power of the candidate AP MLDs.

In some embodiments, the fifth frame is a beacon frame.

It should be understood that the frame format illustrated in FIG. 18 is merely provided as an example rather than a limitation. The fifth frame may further carry fewer or more fields. For example, the fifth frame carries only the TX Power field and the Target Receive Power field; or carries only the TX Power field, the Target Receive Power field, and the Max Power field; or carries only the Element ID field, the Length field, the TX Power field, the Target Receive Power field, and the Max receive Power field; or further carries the Reserved field in addition to the six fields illustrated in FIG. 18, and so on. The order of the fields illustrated in FIG. 18 may be adjusted according to actual conditions. For example, the Target Receive Power field precedes the TX Power field, the Element ID Extension field precedes the Length field, the Length field follows the Target Receive Power field, or the Max Power field precedes the TX Power field, and so on. The number of bytes for each field illustrated in FIG. 18 is variable. For example, the TX Power field occupies 2 bytes, or the Target Receive Power field occupies 2 bytes, the Max Power field occupies 0 bytes, or the Element ID field occupies 0 bytes, and so on. The names of the fields illustrated in FIG. 18 are variable. For example, the TX Power field may also be referred to as the Power field, the Target Receive Power field may also be referred to as the expected receive Power field or Power field, or the Max Power field may also be referred to as the acceptable power threshold field or acceptable Max Power field, and so on.

**In S1507,** the STA MLD determines the first power value based on the power information of the candidate AP MLD.

The STA MLD scans the power information of the candidate AP MLD, that is, the STA MLD scans the fifth frame.

The first power value is the transmit power value required by the STA MLD on the first target link when the STA MLD establishes the first target link with the target AP MLD. The second power value is the transmit power value required by the candidate AP MLD on the first target link when the candidate AP MLD establishes the first target link with the STA MLD.

In some embodiments, the first power value is calculated by the STA MLD, or is calculated by the source AP MLD and then transmitted to the STA MLD.

In some embodiments, the power information of the candidate AP MLD includes at least one of the fourth power value, the fifth power value, or the third power value, and the STA MLD calculates the first power value and the second power value based on at least one of the fourth power value, the fifth power value, or the third power value.

In some embodiments, the STA MLD transmits the calculated first power value and second power value to the source AP MLD.

In some embodiments, the STA MLD transmits the first power value and the second power value to the source AP MLD over the second source link.

In some embodiments, the power information of the candidate AP MLD includes at least one of the fourth power value, the fifth power value, or the third power value, and the STA MLD transmits the power information of the candidate AP MLD, the sixth power value, and the seventh power value to the source AP MLD. The sixth power value is the expected receive power value of the STA MLD on the first target link, and the STA MLD receives the first power value and the second power value from the source AP MLD.

The third power value is the maximum transmit power value of the candidate AP MLD on the first target link, that is, the third power value is the maximum transmit power value that the candidate AP MLD may adopt on the first target link when satisfying regulatory requirements and based on its own state (for example, the power supply state). The fourth power value is the transmit power value adjusted by the candidate AP MLD based on power control information, that is, the fourth power value is the transmit power value that the candidate AP MLD adjusts to on the first target link based on the power control information, or the current transmit power of the candidate AP MLD on the first target link. The fifth power value is the target receive power value of the candidate AP MLD on the first target link, that is, the fifth power value is the receive power that the candidate AP MLD expects to measure when receiving a signal from a transmitter (such as the STA MLD) on the first target link. The sixth power value is the expected receive power value of the STA MLD on the first target link. The seventh power value is the receive power value measured by the STA MLD on the first target link when receiving a signal from a transmitter (such as the candidate AP MLD).

In some embodiments, the STA MLD transmits the power information of the candidate AP MLD, the sixth power value, and the seventh power value to the source AP MLD over the second source link.

It is assumed that the first power value is Ps and the second power value is Pa. The calculation formulas for the first power value and the second power value are:

$$Ps = PL + TargetRx_{pwr}^{AP} \qquad (2)$$

$$Pa = PL + TargetRx_{pwr}^{STA} \qquad (3)$$

$$PL = Tx_{pwr}^{AP} - Rx_{pwr} \qquad (4)$$

$PL$ represents the path loss, $TargetRx_{pwr}^{AP}$ represents the expected receive power of the candidate AP MLD when establishing the first target link; $TargetRx_{pwr}^{STA}$ represents the expected receive power of the STA MLD when establishing the first target link; $Tx_{pwr}^{AP}$ represents the transmit power of the second frame, that is, the transmit power used by the candidate AP MLD to transmit the second frame; $Rx_{pwr}$ represents the receive power of the fifth frame, that is, the receive power used by the STA MLD to receive the fifth frame.

**In S1508,** the source AP MLD transmits third power indication information to the candidate AP MLD.

The third power indication information is used to instruct the candidate AP MLD to maintain the transmit power adjusted based on the first power indication information.

**In S1509,** a target AP MLD is determined.

In some embodiments, the target AP MLD is determined based on the second power value and the third power value.

In some embodiments, a target AP MLD is determined from the candidate AP MLDs based on the magnitude relationship between the second power value and the third power value.

Exemplarily, in the case where the second power value is less than or equal to the third power value, i.e., *Pa ≤ Pmax,* the candidate AP MLD corresponding to the third power value greater than or equal to the second power value is the target AP MLD, and the STA MLD may establish the first target link with the target AP MLD.

In some embodiments, a target AP MLD is determined from the candidate AP MLDs based on the priority score. The target AP MLD is the AP MLD with the highest priority score in the candidate AP MLDs. The priority score is determined based on the power information of the candidate AP MLD and the second power value.

In some embodiments, the priority score is a difference between a first product and a second sum value. The first product is a product of the third power value corresponding to the candidate AP MLD and the first weight, and the second sum value is the sum of a second product and a third product. The second product is a product of path loss and a second weight, and the third product is a product of the second power value and a third weight. The sum of the first weight, the second weight, and the third weight is 1 or 100%.

It is assumed that the first weight is α, the second weight is β, the third weight is γ, the third power value is Pmax, the path loss is PL, and the second power value is Pa, then the calculation formula for the priority score *Score* is:

$$Score = \alpha \cdot Pmax - \beta \cdot PL - \gamma \cdot Pa \qquad (5)$$

α + β + γ = 1, or α + β + γ = 100%. Moreover, the value of a is within [0, 1], the value of β is within [0, 1], and the value of γ is within [0, 1].

In some embodiments, the target AP MLD is determined by the STA MLD and transmitted to the source AP MLD, or determined by the source AP MLD and transmitted to the STA MLD, or determined by the STA MLD and the source AP MLD. That is, the magnitude relationship between the second power value and the third power value may be determined by the source AP MLD, or the STA MLD, or both the source AP MLD and the STA MLD, and the priority score may be calculated by the source AP MLD, or the STA MLD, or both the source AP MLD and the STA MLD.

In some embodiments, the priority score is calculated by the STA MLD. That is, the target AP MLD is determined by the STA MLD. The STA MLD transmits a target AP MLD confirmation indication to the source AP MLD to notify the source AP MLD of the target AP MLD. In some embodiments, the target AP MLD confirmation indication further includes the second power value corresponding to the target AP MLD.

In some embodiments, the priority score is calculated by the source AP MLD. That is, the target AP MLD is determined by the source AP MLD. The source AP MLD transmits a target AP MLD confirmation indication to the STA MLD to notify the STA MLD of the target AP MLD. In some embodiments, the target AP MLD confirmation indication further includes the fourth power value corresponding to the target AP MLD.

**In S1510,** the STA MLD transmits power confirmation indication information to the source AP MLD.

The power confirmation indication information is used to instruct the target AP MLD to set the transmit power to the second power value.

In some embodiments, the STA MLD transmits the power confirmation indication to the source AP MLD over the second source link.

**In S1511,** the source AP MLD transmits power confirmation indication information to the target AP MLD.

In some embodiments, the target AP MLD maintains the second power value as the transmit power until receiving the second power indication information from the source AP MLD. The second power indication information is used to restore the transmit power of the candidate AP MLDs, that is, to restore the transmit power of the candidate AP MLDs from the fourth power value to the transmit power value prior to receiving the first power indication information.

In some embodiments, the first power indication information indicates the life time, that is, the effective time of the first power indication information. Upon expiration of the life time, the candidate AP MLD automatically restores the transmit power.

In some embodiments, the power confirmation indication information indicates the life time, that is, the effective time of the power confirmation indication. Upon expiration of the life time, the candidate AP MLD automatically restores the transmit power.

Restoring the transmit power by the candidate AP MLD may reduce the power consumption waste and mitigate the negative impact of link transition on the communication system, such as signal interference.

**In S1512,** the first target link is established.

Based on the first power value and the second power value, the first target link is established between the STA MLD and the target AP MLD.

Exemplarily, S1512 includes S1512a, S1512b, S1512c, and S1512d.

In S1512a, the STA MLD transmits an authentication request.

In some embodiments, the STA MLD transmits the authentication request to the source AP MLD, and the source AP MLD transmits the authentication request to the target AP MLD; or the STA MLD transmits the authentication request to the target AP MLD.

In some embodiments, the STA MLD transmits the authentication request to the target AP MLD using the first power value.

In S1512b, the target AP MLD transmits an authentication response.

In some embodiments, the target AP MLD transmits the authentication response to the source AP MLD, and the source AP MLD transmits the authentication response to the STA MLD; or the target AP MLD transmits the authentication response to the STA MLD.

In some embodiments, the target AP MLD transmits the authentication response to the STA MLD using the second power value.

In S1512c, the STA MLD transmits a reassociation request to the target AP MLD.

In some embodiments, the STA MLD transmits the reassociation request to the target AP MLD using the first power value.

In S1512d, the target AP MLD transmits a reassociation response to the STA MLD.

In some embodiments, the target AP MLD transmits the reassociation response to the STA MLD using the second power value.

For the relevant content of the authentication request, the authentication response, reassociation request, and the reassociation response, reference may be made to the relevant content in the IEEE 802.11r protocol.

In S1513, the STA MLD transmits an association success indication to the source AP MLD.

The association success indication is used to indicate to the source AP MLD that the first target link has been successfully established, that is, the association between the STA MLD and the target AP MLD is successful.

In some embodiments, the association success indication is also used to trigger the source AP MLD to transmit second power indication information. The second power indication information is used to restore the transmit power of the candidate AP MLDs, that is, to restore the transmit power of the candidate AP MLDs from the fourth power value to the transmit power value prior to receiving the first power indication information.

In S1514, a second target link is established based on the first target link.

In some embodiments, the STA MLD disconnects the second source link to the source AP MLD autonomously; alternatively, in the case where the communication quality of the second source link is lower than a third threshold, the STA MLD disconnects the second source link; alternatively, in the case where the communication quality of the second source link is lower than a fourth threshold, the second source link is automatically disconnected.

In some embodiments, the STA MLD transmits a disassociation indication to the source AP MLD; the disassociation indication is used to disassociate the STA MLD from the source AP MLD and/or disconnect the second source link.

In some embodiments, with the assistance of the first target link, the STA MLD establishes the second target link with the target AP MLD.

In some embodiments, the STA MLD establishes the second target link with the target AP MLD using the FT technology. Exemplarily, the STA MLD transmits an authentication request to the target AP MLD over the first target link, the target AP MLD transmits an authentication response to the STA MLD over the first target link, the STA MLD transmits a reassociation request to the target AP MLD over the first target link, and the target AP MLD transmits a reassociation response to the STA MLD over the first target link, such that the second target link is established, that is, the second source link is transitioned to the second target link.

It should be understood that, in the embodiments of the present disclosure, S1508, S1510, S1511, S1513, and S1514 are optional steps. S1503 and S1504 may be combined into one process, and S1510 and S1511 may be combined into one process. S1513 may be divided into two processes, that is, the process of the STA MLD transmitting the association success indication and the process of the source AP MLD transmitting the second power indication information. The execution order of each process may be adaptively adjusted according to specific circumstances. For example, S1514 may be performed prior to S1513, or S1508 may be performed upon S1509.

In some embodiments, S1504 to S1506 are repeatedly performed prior to S1507, or S1504 to S1508 are repeatedly prior to S1509. That is, prior to determining the target AP MLD, the STA MLD may scan the power information of the candidate AP MLD in real time and calculate the first power value multiple times, until the target AP MLD is determined.

It should be understood that some or all of the processes in the method for link transition illustrated in FIG. 15 may be performed by the target AP MLD, and the target AP MLD belongs to the candidate AP MLD. Exemplarily, the target AP MLD may perform S1505, S1506, S1512, S1514, and S1511, and may also participate in performing S1507 and S1508.

In summary, in the method according to the embodiments of the present disclosure, the STA MLD controls the transmit power of the candidate AP MLDs by transmitting the power control information during the process of link transition, the target AP MLD is determined from the candidate AP MLDs by passive scanning, and the first target link is established by controlling the transmit power of the target AP MLD and the transmit power of the STA MLD, such that the established first target link has the great reliability. Moreover, during the process of transitioning the first source link to the first target link, maintaining the connection between the STA MLD and the source AP MLD may prevent the problem of the interruption in data transmission that may occur during link transition, reduce the likelihood of the interruption in data transmission perceived by the user, and enhance the user experience. In addition, the STA MLD may further establish the second target link based on the established first target link, such that roaming from the source AP MLD to the target AP MLD possesses the great reliability and the great simplicity, the efficiency and stability of the communication system are greatly improved, and the communication quality is ensured.

It should be understood that, in the embodiments of the present disclosure, the formats, names, and values of the frames/elements/fields involved are merely examples and do not imply any limitation on the formats, names, or values of the frames/elements/fields. In different embodiments or different designs, it is not excluded that at least one of the following aspects of the foregoing elements/fields may be changed: the name, the position within the frame, the arrangement order with other elements/fields, the number of bytes occupied, or the number of bits occupied.

FIG. 19 illustrates a schematic diagram of the relationship between a communication quality and link transition according to some exemplary embodiments of the present disclosure. Taking communication quality represented by the RSSI value as an example, as illustrated in FIG. 19, in the case where the RSSI value of the first source link is lower than the threshold T1, the transmit power of the candidate AP MLDs may increase. That is, the RSSI value of the first target link corresponding to the target AP MLD increases.

In the case where the target AP MLD is determined, or in the case where the RSSI value of the first target link corresponding to the target AP MLD reaches the threshold T2, the first target link is established. That is, the first target link is established, and the first target link possesses the great reliability. In this case, the STA MLD maintains association with both the source AP MLD and the target AP MLD, i.e., maintains link connection.

In the case where the RSSI value of the second source link is lower than the threshold T3, transition from the second source link to the second target link starts, and the STA MLD may disassociate from the source AP MLD and disconnect the second source link. Afterwards, the STA MLD can establish the second target link with the target AP MLD.

Considering that association between the STA and both the source AP MLD and the target AP MLD is only a transitional state during the roaming process, the threshold T3 is greater than T1 to reduce the time that the STA maintains association with two AP MLDs simultaneously, lower resource waste and power consumption waste, and ensure the communication quality of the second target link.

The first target link baseline represents the RSSI value of the first target link in the case where the method for link transition according to the embodiments of the present disclosure is not adopted, that is, the RSSI value of the first target link established without adjusting the transmit power of the target AP MLDs through power control information.

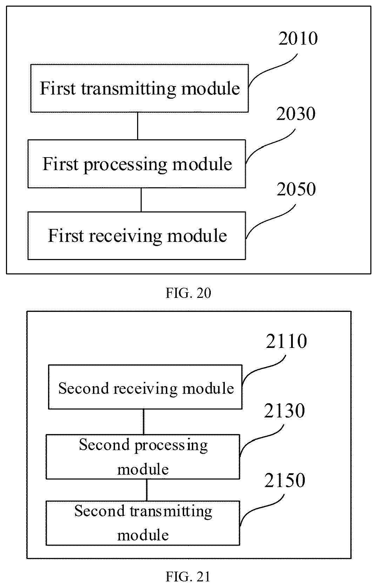

FIG. 20 illustrates a structural block diagram of an apparatus for link transition according to some exemplary embodiments of the present disclosure. The apparatus includes at least some of: a first transmitting module 2010, a first processing module 2030, and a first receiving module 2050.

The first transmitting module 2010 is configured to transmit power control information in the process of transitioning a first source link to a first target link.

The power control information is used to control the transmit power of the candidate AP MLDs or the target AP MLD; the first source link refers to at least one link corresponding to the STA MLD and the source AP MLD, and the first target link refers to at least one link corresponding to the STA MLD and the target AP MLD; and the target AP MLD is an AP MLD in the candidate AP MLDs.

In some embodiments, the first transmitting module 2010 is further configured to perform the transmitting processes performed by the STA MLD in the above method embodiments.

The first processing module 2030 is configured to perform the processes related to determination, processing, and calculation performed by the STA MLD in the above method embodiments.

The first receiving module 2050 is configured to perform the receiving processes performed by the STA MLD in the above method embodiments.

In some embodiments, the apparatus according to the embodiments of the present disclosure includes a first transmitting module 2010, and the first transmitting module 2010 performs all transmitting processes performed by the STA MLD in the above method embodiments.

In some embodiments, the apparatus according to the embodiments of the present disclosure includes a plurality of first transmitting modules 2010, and the plurality of first transmitting modules 2010 respectively perform part of the transmitting processes performed by the STA MLD in the above method embodiments.

In some embodiments, the processes performed by different first transmitting modules 2010 are completely the same, partially the same, or completely different.

In some embodiments, the apparatus according to the embodiments of the present disclosure includes a first processing module 2030, and the first processing module 2030 performs all processes related to determination, processing, and calculation performed by the STA MLD in the above method embodiments.

In some embodiments, the apparatus according to the embodiments of the present disclosure includes a plurality of first processing modules 2030, and the plurality of first processing modules 2030 respectively perform part of the processes related to determination and/or processing and/or calculation performed by the STA MLD in the above method embodiments.

In some embodiments, the processes performed by different first processing modules 2030 are completely the same, partially the same, or completely different.

In some embodiments, the apparatus according to the embodiments of the present disclosure includes a first receiving module 2050, and the first receiving module 2050 perform all receiving processes performed by the STA MLD in the above method embodiments.

In some embodiments, the apparatus according to the embodiments of the present disclosure includes a plurality of first receiving modules 2050, and the plurality of first receiving modules 2050 respectively support execution of part of the receiving steps performed by the STA MLD in the above method embodiments.

In some embodiments, the steps performed by different first receiving modules 2050 may be completely the same, partially the same, or completely different.

In summary, the apparatus according to the present disclosure supports to control the transmit power of the candidate AP MLDs by transmitting the power control information during the process of link transition, such that active scanning or passive scanning of the first target link is achieved. The link transition mode exhibits the higher flexibility, and the established first target link also exhibits the great reliability. Moreover, the problem of the interruption in data transmission that may occur during link transition is avoided, the likelihood of the interruption in data transmission perceived by the user is reduced, and the user experience is enhanced. In addition, the second target link is established based on the established first target link, such that roaming from the source AP MLD to the target AP MLD possesses the great reliability and the great simplicity.

FIG. 21 illustrates a structural block diagram of an apparatus for link transition according to some exemplary embodiments of the present disclosure. The apparatus includes at least some of: a second receiving module 2110, a second processing module 2130, and a second transmitting module 2150.

The second receiving module 2110 is configured to receive power control information in the process of transitioning a first source link to a first target link.

The power control information is used to control the transmit power of the candidate AP MLDs or the target AP MLD; the first source link refers to at least one link corresponding to the STA MLD and the source AP MLD, and the first target link refers to at least one link corresponding to the STA MLD and the target AP MLD; and the target AP MLD is an AP MLD in the candidate AP MLDs.

In some embodiments, the second receiving module 2110 is further configured to perform the receiving processes performed by the candidate AP MLD in the above method embodiments.

The second processing module 2130 is configured to perform the processes related to determination, processing, and calculation performed by the candidate AP MLD in the above method embodiments.

The second transmitting module 2150 is configured to perform the transmitting processes performed by the candidate AP MLD in the above method embodiments.

In some embodiments, the apparatus according to the embodiments of the present disclosure includes a second receiving module 2110, and the second receiving module 2110 perform all receiving processes performed by the candidate AP MLD in the above method embodiments.

In some embodiments, the apparatus according to the embodiments of the present disclosure includes a plurality of second receiving modules 2110, and the plurality of second receiving modules 2110 respectively perform part of the receiving processes performed by the candidate AP MLD in the above method embodiments.

In some embodiments, the processes performed by different second receiving modules 2110 may be completely the same, partially the same, or completely different.

In some embodiments, the apparatus according to the embodiments of the present disclosure includes a second processing module 2130, and the second processing module 2130 performs all processes related to determination, processing, and calculation performed by the candidate AP MLD in the above method embodiments.

In some embodiments, the apparatus according to the embodiments of the present disclosure includes a plurality of second processing modules 2130, and the plurality of second processing modules 2130 perform part of the processes related to determination and/or processing and/or calculation performed by the candidate AP MLD in the above method embodiments.

In some embodiments, the processes performed by different second processing modules 2130 are completely the same, partially the same, or completely different.

In some embodiments, the apparatus according to the embodiments of the present disclosure includes a second transmitting module 2150, and the second transmitting module 2150 performs all transmitting processes performed by the candidate AP MLD in the above method embodiments.

In some embodiments, the apparatus according to the embodiments of the present disclosure includes a plurality of second transmitting modules 2150, and the plurality of second transmitting modules 2150 perform part of the transmitting processes performed by the candidate AP MLD in the above method embodiments.

In some embodiments, the processes performed by different second transmitting modules 2150 are completely the same, partially the same, or completely different.

In summary, the apparatus according to the present disclosure supports the adjustment of the transmit power based on power control information during the process of link transition, and supports the STA MLD to establish a connection with the target AP MLD by active scanning or passive scanning. The link transition mode exhibits the higher flexibility and improves the reliability of the first target link between the STA MLD and the target AP MLD. Moreover, the method for link transition may prevent the problem of data transmission interruption that may occur during link transition, reduce the likelihood of the interruption in data transmission perceived by the user, and enhance the user experience.

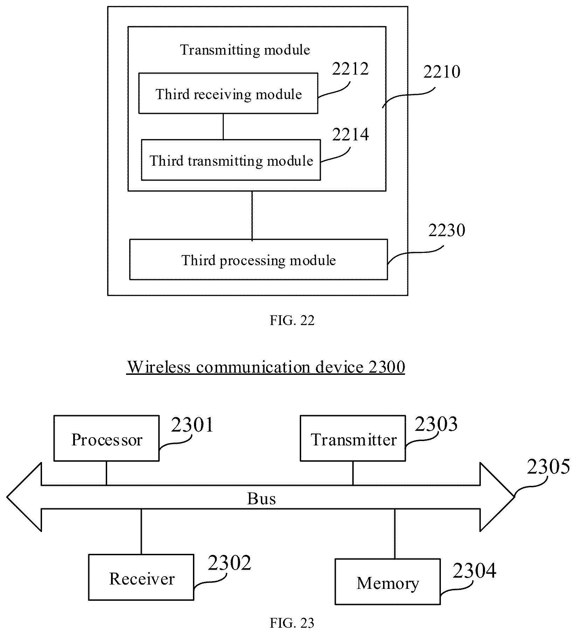

FIG. 22 illustrates a structural block diagram of an apparatus for link transition according to some exemplary embodiments of the present disclosure. The apparatus includes at least some of: a transmitting module 2210, a third processing module 2230, a third receiving module 2212, and a third transmitting module 2214.

The transmitting module 2210 is configured to transmit power control information in the process of transitioning a first source link to a first target link.

The power control information is used to control the transmit power of the candidate AP MLDs or the target AP MLD; the first source link refers to at least one link corresponding to the STA MLD and the source AP MLD, and the first target link refers to at least one link corresponding to the STA MLD and the target AP MLD; and the target AP MLD is an AP MLD among the candidate AP MLDs.

The third processing module 2230 is configured to perform the processes related to determination, processing, and calculation performed by the source AP MLD in the above method embodiments.

In some embodiments, the transmitting module 2210 includes the third receiving module 2212, and the third receiving module 2212 is configured to perform the receiving processes performed by the source AP MLD in the above method embodiments.

In some embodiments, the transmitting module 2210 includes the third transmitting module 2214, and the third transmitting module 2214 is configured to perform the transmitting processes performed by the source AP MLD in the above method embodiments.

In some embodiments, the apparatus according to the embodiments of the present disclosure includes a transmitting module 2210, and the transmitting module 2210 performs all transmission processes performed by the source AP MLD in the above method embodiments.

In some embodiments, the apparatus according to the embodiments of the present disclosure includes a plurality of transmitting modules 2210, and the plurality of transmitting modules 2210 perform part of the transmission processes performed by the source AP MLD in the above method embodiments.

In some embodiments, the processes performed by different transmitting modules 2210 are completely the same, partially the same, or completely different.

In some embodiments, the apparatus according to the embodiments of the present disclosure includes a third processing module 2230, and the third processing module 2230 performs all processes related to determination, processing, and calculation performed by the source AP MLD in the above method embodiments.

In some embodiments, the apparatus according to the embodiments of the present disclosure includes a plurality of third processing modules 2230, and the plurality of third processing modules 2230 perform part of the processes related to determination and/or processing and/or calculation performed by the source AP MLD in the above method embodiments.

In some embodiments, the processes performed by different third processing modules 2230 are completely the same, partially the same, or completely different.

In some embodiments, the apparatus according to the embodiments of the present disclosure includes a third transmitting module 2214, and the third transmitting module 2214 performs all transmitting processes performed by the source AP MLD in the above method embodiments.

In some embodiments, the apparatus according to the embodiments of the present disclosure includes a third receiving module 2212, and the third receiving module 2212 performs all receiving processes performed by the source AP MLD in the above method embodiments.

In some embodiments, the apparatus according to the embodiments of the present disclosure includes a plurality of third receiving modules 2212, and the plurality of third receiving modules 2212 performs part of the receiving processes performed by the source AP MLD in the above method embodiments.

In some embodiments, the processes performed by different third receiving modules 2212 may be completely the same, partially the same, or completely different.

In some embodiments, the apparatus according to the embodiments of the present disclosure includes a plurality of third transmitting modules 2214, and the plurality of third transmitting modules 2214 perform part of the transmitting processes performed by the source AP MLD in the above method embodiments.

In some embodiments, the processes performed by different third transmitting modules 2214 are completely the same, partially the same, or completely different.

In summary, the apparatus according to the present disclosure supports to control the transmit power of the candidate AP MLDs by transmitting the power control information during the process of link transition, such that the first target link between the STA MLD and the target AP MLD has the higher reliability. Moreover, the method for link transition may prevent the problem of the interruption in data transmission that may occur during link transition, reduce the interruption in data transmission perceived by the user, and enhance the user experience.

It should be noted that, for the apparatus according to the embodiments, the division of the functional modules is merely exemplary. In practical applications, the functions described above may be assigned to different functional modules as needed; that is, the internal structure of the device may be divided into different functional modules to implement all or a part of the above functions.

With regard to the apparatus in the embodiments, the specific manner in which each module performs operations has been described in detail in the embodiments related to the method and will not be described in detail herein.

FIG. 23 illustrates a schematic structural diagram of a wireless communication device (an AP or STA) according to some exemplary embodiments of the present disclosure. The wireless communication device 2300 includes: a processor 2301, a receiver 2302, a transmitter 2303, a memory 2304, and a bus 2305.

The processor 2301 includes one or more processing cores, and the processor 2301 executes various functional applications and performs information processing by running software programs and modules. In some embodiments, the processor 2301 is configured to implement the functions and processes of the first processing module 2030 and/or the second processing module 2130 and/or the third processing module 2230.

The receiver 2302 and the transmitter 2303 may be implemented as a communication assembly, which may be a communication chip. In some embodiments, the receiver 2302 is configured to implement the functions and processes of the first receiving module 2050 and/or the second receiving module 2110 and/or the third receiving module 2212. In some embodiments, the transmitter 2303 is configured to implement the functions and processes of the first transmitting module 2010 and/or the second transmitting module 2150 and/or the third transmitting module 2214.

The memory 2304 is connected to the processor 2301 via the bus 2305. The memory 2304 is configured to store one or more instructions, and the processor 2301 is configured to execute the one or more instructions to perform the processes in the above method embodiments.

In addition, the memory 2304 may be implemented by any type or combination of volatile or non-volatile storage devices including, but not limited to: magnetic or optical disks, electrically erasable programmable read-only memories (EEPROMs), erasable programmable read-only memories (EPROMs), static random access memories (SRAMs), read-only memories (ROMs), magnetic memories, flash memories, and programmable read-only memories (PROMs).

In some embodiments, the receiver 2302 independently receives signals/data, or the processor 2301 controls the receiver 2302 to receive signals/data, or the processor 2301 requests the receiver 2302 to receive signals/data, or the processor 2301 cooperates with the receiver 2302 to receive signals/data.

In some embodiments, the transmitter 2303 independently transmits signals/data, or the processor 2301 controls the transmitter 2303 to transmit signals/data, or the processor 2301 requests the transmitter 2303 to transmit signals/data, or the processor 2301 cooperates with the transmitter 2303 to transmit signals/data.

In some exemplary embodiments of the present disclosure, a computer-readable storage medium is further provided. The computer-readable storage medium stores at least one program. The at least one program, when loaded and run by a processor, causes the computer-readable storage medium to perform the method for link transition according to the above method embodiments.

In some exemplary embodiments of the present disclosure, a chip is further provided. The chip includes programmable logic circuitry and/or one or more program instructions. The chip, when running, causes the communication device to perform the method for link transition according to the above method embodiments.

In some exemplary embodiments of the present disclosure, a computer program product is further provided. The computer program product, when run by a processor of a computer device, causes the computer device to perform the method for link transition.

In some exemplary embodiments of the present disclosure, a computer program is further provided. The computer program includes one or more computer instructions. The one or more computer instructions, when executed by a processor of a computer device, cause the computer device to perform the method for link transition described above.

Those skilled in the art should recognize that in the one or more examples described above, the functions described in the embodiments of the present disclosure may be implemented using hardware, software, firmware, or any combination thereof. The functions, when implemented using software, are stored in a computer-readable medium or transmitted as one or more instructions or codes on the computer-readable medium. The computer-readable medium includes a computer storage medium and a communication medium, where the communication medium includes any medium that facilitates the transfer of a computer program from one place to another. The storage medium is any available medium that is accessible by a general-purpose or special-purpose computer.

It should be understood that the frame formats and element formats illustrated in the embodiments of the present disclosure are exemplary cases. In different embodiments or different designs, it is not excluded that at least one of the following design aspects of each field may change: the position within the frame/element, the arrangement order with other fields, the number of bytes occupied, or the number of bits occupied. The present disclosure does not place any limitation on the specific formats of each frame or each element.

Described above are merely optional embodiments of the present disclosure and are not intended to limit the present disclosure. Any modifications, equivalent substitutions, improvements, and the like, made within the spirit and principle of the present disclosure shall fall within the protection scope of the present disclosure.

**Claims**

1. A method for link transition, performed by a station (STA) multi-link device (MLD), the method comprising:
transmitting power control information in a process of transitioning a first source link to a first target link, wherein the power control information is used to control transmit power of candidate access point (AP) MLDs or a target AP MLD, the first source link refers to at least one link corresponding to the STA MLD and a source AP MLD, and the first target link refers to at least one link corresponding to the STA MLD and the target AP MLD, wherein the target AP MLD is an AP MLD in the candidate AP MLDs.

2. The method according to claim 1, wherein

the power control information comprises first power indication information; and
transmitting the power control information comprises:
transmitting the first power indication information to the candidate AP MLDs.

3. The method according to claim 1, wherein

the power control information comprises first power control trigger information; and
transmitting the power control information comprises:
transmitting the first power control trigger information to the source AP MLD, wherein the first power control trigger information is used to trigger the source AP MLD to transmit first power indication information to each of the candidate AP MLDs, wherein the first power indication information is used to adjust the transmit power of the each of the candidate AP MLDs.

4. The method according to any one of claims 1 to 3, further comprising:
receiving power information of at least one of candidate AP MLDs.

5. The method according to any one of claims 1 to 4, further comprising:
determining a first power value based on power information of each of the candidate AP MLDs, wherein the first power value is a transmit power value required for the STA MLD to establish the first target link.

6. The method according to any one of claims 1 to 5, further comprising:
determining a second power value based on power information of each of the candidate AP MLDs, wherein the second power value is a transmit power value required for the each of the candidate AP MLDs and the STA MLD to establish a link.

7. The method according to claim 6, further comprising:
transmitting a first power value and the second power value to the source AP MLD.

8. The method according to any one of claims 1 to 7, wherein the target AP MLD is an AP MLD with a highest priority score in the candidate AP MLDs;
wherein the priority score is determined based on power information of each of the candidate AP MLDs and a first power value, wherein the first power value is a transmit power value required for the STA MLD to establish the first target link.

9. The method according to claim 8, wherein

the power information of the each of the candidate AP MLDs comprises a third power value, wherein the third power value is a maximum transmit power value of the each of the candidate AP MLDs; and
the priority score is determined based on the third power value of the each of the candidate AP MLDs, a path loss, and the first power value.

**10.** The method according to any one of claims 1 to 9, wherein

the power control information comprises second power indication information; and
transmitting the power control information comprises:
transmitting the second power indication information to another candidate AP MLD, wherein the another candidate AP MLD is an AP MLD in the candidate AP MLDs other than the target AP MLD, and the second power indication information is used to restore transmit power of the another candidate AP MLD.

**11.** The method according to any one of claims 1 to 9, wherein

the power control information comprises second power control trigger information; and
transmitting the power control information comprises:
transmitting the second power control trigger information to the source AP MLD, wherein the second power control trigger information is used to trigger the source AP MLD to transmit second power indication information to another candidate AP MLD, wherein the another candidate AP MLD is an AP MLD in the candidate AP MLDs other than the target AP MLD, and the second power indication information is used to restore transmit power of the another candidate AP MLD.

**12.** The method according to claim 2, wherein the first power indication information is carried in a first frame for transmission, wherein the first frame comprises at least one of a Transmit Power field or a Target Receive Power field.

**13.** The method according to any one of claims 5 to 9, wherein the power information of the each of the candidate AP MLDs is carried in a second frame for transmission, wherein the second frame comprises at least one of a Transmit Power field, a Target Receive Power field, or a Maximum Power field.

**14.** The method according to claim 3, wherein the first power control trigger information is transmitted over a second source link, wherein the second source link is at least one link, other than the first source link, corresponding to the STA MLD and the source AP MLD.

**15.** The method according to claim 3 or 14, wherein the first power control trigger information is carried in a third frame for transmission, wherein the third frame comprises at least one of a Category field, an Action field, a Link Identifier field, a Dialog Token field, an Element Identifier field, a Length field, an Element Identifier Extension field, or an AP MLD Information field.

**16.** The method according to claim 15, wherein the AP MLD Information field comprises at least one of an AP MLD Address field or a Power field.

**17.** The method according to claim 15 or 16, wherein a value of the Action field comprises at least one of:

a first value, indicating that a second frame is used to indicate the first power control trigger information;
a second value, indicating that a second frame comprises a power upload indication;
a third value, indicating that a second frame comprises a target AP MLD confirmation indication; or
a fourth value, indicating that a second frame comprises a target AP MLD association completion indication.

**18.** The method according to claim 3 or any one of claims 14 to 17, wherein the first power indication information is carried in a fourth frame for transmission, wherein the fourth frame comprises at least one of a Link Identifier field, a Power field, or a Life Time field.

**19.** A method for link transition, performed by a target access point (AP) multi-link device (MLD), the method comprising:
receiving power control information in a process of transitioning a first source link to a first target link, wherein the power control information is used to control transmit power of candidate AP MLDs or the target AP MLD, the first source link refers to at least one link corresponding to a station (STA) MLD and a source AP MLD, and the first target link refers to at least one link corresponding to the STA MLD and the target AP MLD, wherein the target AP MLD is an AP MLD in the candidate AP MLDs.

**20.** The method according to claim 19, wherein receiving the power control information comprises:
receiving first power indication information from the STA MLD, wherein the first power indication information is used to adjust the transmit power of each of the candidate AP MLDs.

**21.** The method according to claim 20, wherein receiving the power control information comprises:
receiving the first power indication information from the source AP MLD, wherein the first power indication information is used to adjust the transmit power of the each of the candidate AP MLDs.

**22.** The method according to any one of claims 19 to 21, further comprising:
transmitting power information of the target AP MLD to the STA MLD.

**23.** The method according to any one of claims 19 to 22, wherein the target AP MLD is an AP MLD with a highest priority score in the candidate AP MLDs;
wherein the priority score is determined based on power information of the target AP MLD and a first power value, wherein the first power value is a transmit power value required for the STA MLD to establish the first target link.

**24.** The method according to claim 23, wherein

the power information of the target AP MLD comprises a third power value, wherein the third power value is a maximum transmit power value of the target AP MLD; and
the priority score of the target AP MLD is determined based on the third power value of the target AP MLD, a path loss, and the first power value.

**25.** The method according to claim 20, wherein the first power indication information is carried in a first frame for transmission, wherein the first frame comprises at least one of a Transmit Power field or a Target Receive Power field.

**26.** The method according to claim 22, wherein the power information of the target AP MLD is carried in a second frame for transmission, wherein the second frame comprises at least one of a Transmit Power field, a Target Receive Power field, or a Maximum Power field.

**27.** The method according to claim 21, wherein the first power indication information is carried in a fourth frame for transmission, wherein the fourth frame comprises at least one of a Link Identifier field, a Power field, or a Life Time field.

**28.** A method for link transition, performed by a source access point (AP) multi-link device (MLD), the method comprising:
transmitting power control information in a process of transitioning a first source link to a first target link, wherein the power control information is used to control transmit power of candidate AP MLDs or a target AP MLD, the first source link refers to at least one link corresponding to a station (STA) MLD and the source AP MLD, and the first target link refers to at least one link corresponding to the STA MLD and the target AP MLD, wherein the target AP MLD is an AP MLD in the candidate AP MLDs.

**29.** The method according to claim 28, wherein transmitting the power control information comprises:

receiving first power control trigger information from the STA MLD, wherein the first power control trigger information is used to trigger the source AP MLD to transmit first power indication information to each of the candidate AP MLDs; and
transmitting the first power indication information to the each of the candidate AP MLDs, wherein the first power indication information is used to adjust the transmit power of the each of the candidate AP MLDs.

**30.** The method according to claim 28 or 29, further comprising:
receiving a first power value and a second power value from the STA MLD, wherein the first power value is a transmit power value required for the STA MLD to establish the first target link, and the second power value is a transmit power value required for each of the candidate AP MLDs and the STA MLD to establish a link.

**31.** The method according to claim 30, further comprising:
transmitting third power indication information to the each of the candidate AP MLDs, wherein the third power indication information is used to instruct the each of the candidate AP MLDs to maintain transmit power adjusted based on first power indication information.

**32.** The method according to any one of claims 28 to 31, wherein the target AP MLD is an AP MLD with a highest priority score in the candidate AP MLDs;
wherein the priority score is determined based on power information of each of the candidate AP MLDs and a first power value, wherein the first power value is a transmit power value required for the STA MLD to establish the first target link.

33. The method according to claim 32, wherein

the power information of the each of the candidate AP MLDs comprises a third power value, wherein the third power value is a maximum transmit power value of the each of the candidate AP MLDs; and
the priority score is determined based on the third power value of the each of the candidate AP MLDs, a path loss, and the first power value.

34. The method according to any one of claims 28 to 33, wherein

the power control information comprises second power indication information; and
transmitting the power control information comprises:

transmitting the second power indication information to another candidate AP MLD,
wherein the another candidate AP MLD is an AP MLD in the candidate AP MLDs other than the target AP MLD, and the second power indication information is used to restore transmit power of the another candidate AP MLD.

35. The method according to claim 34, wherein prior to transmitting the second power indication information to the another candidate AP MLD, the method further comprises:
receiving second power control trigger information from the STA MLD, wherein the second power control trigger information is used to trigger the source AP MLD to transmit the second power indication information to the another candidate AP MLD.

36. The method according to claim 29, wherein the first power control trigger information is carried in a third frame for transmission, wherein the third frame comprises at least one of a Category field, an Action field, a Link Identifier field, a Dialog Token field, an Element Identifier field, a Length field, an Element Identifier Extension field, or an AP MLD Information field.

37. The method according to claim 33, wherein the AP MLD Information field comprises at least one of an AP MLD Address field or a Power field.

38. The method according to claim 36 or 37, wherein a value of the Action field comprises at least one of:

a first value, indicating that a second frame is used to indicate first power control trigger information;
a second value, indicating that a second frame comprises a power upload indication;
a third value, indicating that a second frame comprises a target AP MLD confirmation indication; or
a fourth value, indicating that a second frame comprises a target AP MLD association completion indication.

39. The method according to claim 24 or any one of claims 36 to 38, wherein the first power indication information is carried in a fourth frame for transmission, wherein the fourth frame comprises at least one of a Link Identifier field, a Power field, or a Life Time field.

40. An apparatus for link transition, comprising:
a first transmitting module, configured to transmit power control information in a process of transitioning a first source link to a first target link, wherein the power control information is used to control transmit power of candidate access point (AP) MLDs or a target AP MLD; the first source link refers to at least one link corresponding to the apparatus and a source AP MLD, and the first target link refers to at least one link corresponding to the apparatus and the target AP MLD; and the target AP MLD is an AP MLD in candidate AP MLDs.

41. An apparatus for link transition, comprising:
a second receiving module, configured to receive power control information in a process of transitioning a first source link to a first target link, wherein the power control information is used to control transmit power of candidate access point (AP) multi-link devices (MLDs) or the apparatus, the first source link refers to at least one link corresponding to a station (STA) MLD and a source AP MLD, and the first target link refers to at least one link corresponding to the STA MLD and the apparatus, wherein the apparatus is an AP MLD in the candidate AP MLDs.

42. An apparatus for link transition, comprising:
a transmitting module, configured to transmit power control information in a process of transitioning a first source link to a first target link, wherein the power control information is used to control transmit power of candidate access point (AP) multi-link device (MLDs) or a target AP MLD, the first source link refers to at least one link corresponding to a station (STA) MLD and the apparatus, and the first target link refers to at least one link corresponding to the STA MLD and the target AP MLD, wherein the target AP MLD is an AP MLD in the candidate AP MLDs.

43. A wireless device, comprising:

a processor;
a transceiver, communicably connected to the processor; and
a memory, configured to store one or more executable instructions of the processor,
wherein the processor is configured to load and execute the one or more executable instructions to perform the method for link transition as defined in any one of claims 1 to 18, or the method for link transition as defined in any one of claims 19 to 27, or the method for link transition as defined in any one of claims 28 to 39.

44. A computer-readable storage medium, storing one or more executable instructions; the one or more executable instructions, when loaded and executed by a processor, cause the processor to perform the method for link transition as defined in any one of claims 1 to 18, or the method for link transition as defined in any one of claims 19 to 27, or the method for link transition as defined in any one of claims 28 to 39.

45. A chip, comprising: programmable logic circuitry and/or one or more programs, wherein the chip is configured to perform the method for link transition as defined in any one of claims 1 to 18, or the method for link transition as defined in any one of claims 19 to 27, or the method for link transition as defined in any one of claims 28 to 39.

46. A computer program product, comprising: one or more computer instructions stored in a computer-readable storage medium, wherein the one or more computer instructions, when read from the computer-readable storage medium and executed by a processor of a computer device, cause the computer device to perform the method for link transition as defined in any one of claims 1 to 18, or the method for link transition as defined in any one of claims 19 to 27, or the method for link transition as defined in any one of claims 28 to 39.

47. A computer program, comprising: one or more computer instructions, wherein the one or more computer instructions, when loaded and executed by a processor of a computer device, cause the computer device to perform the method for link transition as defined in any one of claims 1 to 18, or the method for link transition as defined in any one of claims 19 to 27, or the method for link transition as defined in any one of claims 28 to 39.

FIG. 1

S201: Association

S202: FT authentication request

S203: FT authentication response

S204: FT reassociation request

S205: FT reassociation response

S206: Completion of roaming from the current AP to the target AP

FIG. 2

FIG. 3

FIG. 4

Transmitting power control information in a process of transitioning a first source link to a first target link

520

FIG. 5

Transmitting power control information in a process of transitioning a first source link to a first target link — 601

Receiving power information of a candidate AP MLD — 602

Determining a first power value and/or a second power value based on the power information of the candidate AP MLD — 603

Determining a target AP MLD — 604

Transitioning the first source link to the first target link — 605

Transmitting second power indication information to the candidate AP MLD — 606

Transitioning a second source link to a second target link based on the first target link — 607

FIG. 6

Receiving power control information in a process of switching a first source link to a first target link — 720

FIG. 7

Receiving power control information in a process of transitioning a first source link to a first target link　810

Transmitting power information of a candidate AP MLD　820

Establishing the first target link　830

Restoring transmit power　840

Establishing a second target link based on the first target link　850

FIG. 8

Transmitting power control information in a process of transitioning a first source link to a first target link　920

FIG. 9

Transmitting power control information in a process of transitioning a first source link to a first target link — 1010

↓

Determining a first power value — 1020

↓

Transmitting third power indication information to a candidate AP MLD — 1030

↓

Receiving second power control trigger information from an STA MLD — 1040

↓

Transmitting second power indication information to the candidate AP MLD — 1050

↓

Receiving an authentication request from the STA MLD — 1060

↓

Transmitting the authentication request to a target AP MLD — 1070

↓

Receiving an authentication response from the target AP MLD — 1080

↓

Transmitting the authentication response to the STA MLD — 1090

FIG. 10

The case where power control information
is not transmitted

The case where power control information
is transmitted

FIG. 11

FIG. 12

| Element ID | Length | Element ID Extension | Transmit Power | Target Receive Power |
|---|---|---|---|---|

Bytes     1       1       1       1       1

FIG. 13

| Element ID | Length | Element ID Extension | Transmit Power | Target Receive Power | Maximum Power |
|---|---|---|---|---|---|

Bytes     1       1       1       1       1       1

FIG. 14

STA MLD | Source AP MLD | Candidate AP MLD

S1501: Establishing a connection

S1502: Disconnecting the first source link

S1503: First power control trigger information

S1504: First power indication information

S1505: Adjusting transmit power

S1506: Transmitting power information of the candidate AP MLD

S1507: Determining a first power value

S1508: Third power indication information

S1509: Determining the target AP MLD

S1510: Power confirmation indication information

S1511: Power confirmation indication information

S1512: Establishing the first target link

S1513: Association success indication

S1514: Establishing the second target link based on the first target link

FIG. 15

Variable

| Category | Action | Dialog Token | Element ID | Length | Element ID Extension | Link ID | AP MLD Information | ... | AP MLD Information |
|---|---|---|---|---|---|---|---|---|---|
| 1 | 1 | 1 | 1 | 1 | 1 | 1 | 7 | | 7 |

Bytes

| AP MLD Address | Power |
|---|---|
| 6 | 1 |

Bytes

FIG. 16

FIG. 17

FIG. 18

FIG. 19

FIG. 20

FIG. 21

Transmitting module

Third receiving module
2212

2210

Third transmitting module
2214

Third processing module
2230

FIG. 22

Wireless communication device 2300

Processor
2301

Transmitter
2303

2305

Bus

Receiver
2302

Memory
2304

FIG. 23

## INTERNATIONAL SEARCH REPORT

| | International application No. |
|---|---|
| | **PCT/CN2023/102040** |

**A.    CLASSIFICATION OF SUBJECT MATTER**

H04W12/08(2021.01)i

According to International Patent Classification (IPC) or to both national classification and IPC

**B.    FIELDS SEARCHED**

Minimum documentation searched (classification system followed by classification symbols)

IPC：H04W

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT; 3GPP: 链路, 接入点, 切换, 功率, 控制, 调整, 提高, 降低, 改变, 候选, 备选, 发射功率, 发送功率, 源, 目标, 多链路, 指示, AP, STA, MLD, source, target, multi-link device, power, control, candidate, indicate

**C.    DOCUMENTS CONSIDERED TO BE RELEVANT**

| Category* | Citation of document, with indication, where appropriate, of the relevant passages | Relevant to claim No. |
|---|---|---|
| X | CN 114205756 A (RUIJIE NETWORKS CO., LTD.) 18 March 2022 (2022-03-18) description, paragraphs [0005]-[0081] | 1-47 |
| A | CN 112788723 A (HUAWEI TECHNOLOGIES CO., LTD.) 11 May 2021 (2021-05-11) entire document | 1-47 |
| A | CN 114097255 A (QUALCOMM INC.) 25 February 2022 (2022-02-25) entire document | 1-47 |
| A | WO 2021251757 A1 (LG ELECTRONICS, INC.) 16 December 2021 (2021-12-16) entire document | 1-47 |
| A | US 2021068171 A1 (MEDIATEK INC.) 04 March 2021 (2021-03-04) entire document | 1-47 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **19 February 2024** | **08 March 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/102040**

| Patent document cited in search report | | | Publication date (day/month/year) | Patent family member(s) | | | Publication date (day/month/year) |
|---|---|---|---|---|---|---|---|
| CN | 114205756 | A | 18 March 2022 | WO | 2023078341 | A1 | 11 May 2023 |
| CN | 112788723 | A | 11 May 2021 | EP | 4040853 | A1 | 10 August 2022 |
| | | | | EP | 4040853 | A4 | 07 December 2022 |
| | | | | CN | 112788723 | B | 09 August 2022 |
| CN | 114097255 | A | 25 February 2022 | TW | 202110265 | A | 01 March 2021 |
| | | | | EP | 3997958 | A1 | 18 May 2022 |
| | | | | US | 2021014776 | A1 | 14 January 2021 |
| | | | | US | 11228963 | B2 | 18 January 2022 |
| | | | | EP | 3997898 | A1 | 18 May 2022 |
| | | | | US | 2023007572 | A1 | 05 January 2023 |
| | | | | KR | 20220034786 | A | 18 March 2022 |
| | | | | US | 2021014911 | A1 | 14 January 2021 |
| | | | | US | 11445431 | B2 | 13 September 2022 |
| | | | | TW | 202110267 | A | 01 March 2021 |
| | | | | KR | 20220031013 | A | 11 March 2022 |
| | | | | WO | 2021011427 | A1 | 21 January 2021 |
| | | | | WO | 2021011426 | A1 | 21 January 2021 |
| WO | 2021251757 | A1 | 16 December 2021 | US | 2023217271 | A1 | 06 July 2023 |
| US | 2021068171 | A1 | 04 March 2021 | US | 11582812 | B2 | 14 February 2023 |

Form PCT/ISA/210 (patent family annex) (July 2022)